Europäisches Patentamt

European Patent Office

Office européen des brevets

(19)

(11)     **EP 1 119 769 B1**

(12)     **FASCICULE DE BREVET EUROPEEN**

(45) Date de publication et mention
de la délivrance du brevet:
**21.12.2005   Bulletin 2005/51**

(51) Int Cl.⁷: **G01N 33/543**, G01N 21/64

(21) Numéro de dépôt: **99946285.6**

(86) Numéro de dépôt international:
**PCT/FR1999/002359**

(22) Date de dépôt: **04.10.1999**

(87) Numéro de publication internationale:
**WO 2000/020861 (13.04.2000 Gazette 2000/15)**

(54) **BIOPUCE ET DISPOSITIF DE LECTURE D'UNE BIOPUCE COMPORTANT UNE PLURALITE DE ZONES DE RECONNAISSANCE MOLECULAIRE**

BIOCHIP MIT EINER MEHRZAHL VON BEREICHEN ZUR MOLEKULAREN ERKENNUNG, UND DAZU GEEIGNETE AUSLESEVORRICHTUNG

BIOCHIP AND BIOCHIP READING DEVICE COMPRISING A PLURALITY OF ZONES FOR MOLECULAR RECOGNITION

(84) Etats contractants désignés:
**AT BE CH CY DE DK ES FI FR GB GR IE IT LI LU MC NL PT SE**

(30) Priorité:  **05.10.1998  FR 9812438**
**23.07.1999  FR 9909588**

(43) Date de publication de la demande:
**01.08.2001   Bulletin 2001/31**

(73) Titulaires:
• **Commissariat à l'Energie Atomique**
**75752 Paris 15ème (FR)**
• **Biomerieux S.A.**
**69280 Marcy l'Etoile (FR)**

(72) Inventeurs:
• **IDA, Michel**
**F-38340 Voreppe (FR)**
• **FARGEIX, Alain**
**F-38240 Meylan (FR)**
• **PERRAUT, François**
**F-38134 Saint Joseph de Rivière (FR)**

• **LAGRANGE, Alexandre**
**F-38120 Saint-Egrève (FR)**

(74) Mandataire: **Weber, Etienne Nicolas et al**
**c/o Brevatome,**
**3, rue du Docteur Lancereaux**
**75008 Paris (FR)**

(56) Documents cités:
**EP-A- 0 640 826          WO-A-98/28623**
**WO-A-98/38490          US-A- 5 721 435**
**US-A- 5 790 710**

• **M. BELLIS ET AL.: "La puce ADN: un multi-réacteur de paillasse" M DECINE SCIENCES, vol. 13, no. 11, 1997, pages 1317-1324, XP002106721 cité dans la demande**
• **A. MARSHALL ET AL.: "DNA chips: an array of possibilities" NATURE BIOTECHNOLOGY, vol. 16, janvier 1998 (1998-01), pages 27-31, XP002106722 cité dans la demande**

**Description**

Domaine technique

La présente invention concerne une biopuce comportant une pluralité de zones de reconnaissance moléculaire et un dispositif de lecture d'une telle biopuce. On entend par biopuce, une puce ou un support présentant à sa surface une ou plusieurs zones, dites zones de reconnaissance, équipées de molécules présentant des propriétés de reconnaissance. Dans la suite du texte, et par abus de langage, le terme biopuce est utilisé indépendamment de la destination de la puce à une analyse chimique ou biologique.

Les molécules de reconnaissance peuvent être, par exemple, des oligonucléotides, des polynucléotides, des protéines telles que des anticorps ou des peptides, des lectines ou tout autre système du type ligand-récepteur. En particulier, les molécules de reconnaissance peuvent comporter des fragments d'ADN ou d'ARN.

Lorsque la biopuce est mise en contact avec un échantillon à analyser, les molécules de reconnaissance sont susceptibles d'interagir, par exemple par complexation ou par hybridation avec des molécules dites "molécules cibles" de l'échantillon. Ainsi, en équipant une biopuce d'une pluralité de zones de reconnaissance avec différentes molécules de reconnaissance sélectivement sensibles à différentes molécules-cibles, il est possible de détecter et éventuellement de quantifier une grande variété de molécules contenues dans l'échantillon. Chaque zone de reconnaissance comporte un seul type de molécules identiques.

Les complexes formés sur la biopuce peuvent être repérés au moyen d'un marquage fluorescent appliqué aux molécules cibles de l'échantillon.

Le dispositif de lecture objet de l'invention est destiné à faciliter l'opération de lecture des molécules marquées ou non, susceptibles d'être présentes dans les zones de reconnaissance d'une puce.

La lecture de zones de reconnaissance peut en effet être réalisée également sans présence de marqueur, une telle technologie étant déjà bien connue de l'état de la technique. Parmi les méthodes directes de détection d'hybridation, on peut distinguer notamment la détection de la variation de la masse, de la variation d'épaisseur et de la variation d'indice. On connaît également des méthodes photothermiques qui sont décrites dans le document (1) dont la référence est précisée à la fin de la description. Enfin, Boccara et al. ont décrit dans les documents (2) et (3) une technique de déflexion photothermique. Des perfectionnements de cette technique sont ensuite apparus dans le document (4). Les références de ces documents sont précisées à la fin de la description.

Ainsi, l'invention trouve des applications dans les domaines de l'analyse biologique et chimique.

Des applications particulières dans le domaine de l'analyse biologique peuvent être la recherche de polymorphismes et de mutations, le séquençage par hybridation et le suivi de l'expression de gènes.

Etat de la technique antérieure

Le nombre de zones de reconnaissance d'une puce est variable en fonction du type d'analyse que l'on souhaite effectuer. Aussi, on distingue les puces dites de "basse densité" qui comportent de quelques dizaines à quelques centaines de zones de reconnaissance et les puces dite de "haute densité" qui peuvent comporter plusieurs milliers à plusieurs centaines de milliers de telles zones.

Sur les puces de haute densité les zones de reconnaissance présentent des tailles réduites. L'extension des zones est en effet inférieure à 100µm, voire inférieure à 10µm.

Comme indiqué précédemment, le repérage des complexes formés sur une biopuce fait appel à des marqueurs fluorescents. Les marqueurs, par exemple, la fluorescéine ou la phycoérythrine, peuvent être couplés directement sur les molécules cibles de l'échantillon à analyser. Les molécules cibles peuvent aussi être marquées par l'intermédiaire de groupements de reconnaissance indirecte, tels que la biotine ou la digoxigénine.

Ainsi, lorsque des molécules de reconnaissance d'une zone de reconnaissance donnée ont interagi ou se sont hybridées avec des molécules cibles marquées, le marqueur fluorescent se trouve fixé sur ces zones.

La lecture d'une biopuce comporte l'excitation des marqueurs fluorescents sous l'effet d'une lumière dite lumière d'excitation dirigée sur la puce, et l'enregistrement, pour chaque zone de reconnaissance, de la fluorescence provoquée par la lumière d'excitation.

La détection d'une fluorescence dans une zone de reconnaissance, permet, en connaissant le type de molécule de reconnaissance présente en cette zone, de conclure à la présence dans l'échantillon à analyser de molécules cibles (marquées) susceptibles d'interagir avec la molécule de reconnaissance connue. Eventuellement, l'intensité de la fluorescence peut être mesurée pour en déduire la concentration des molécules cibles concernées de l'échantillon.

A titre d'illustration de ces techniques, notamment dans les domaines de la biologie génétique, on peut se reporter aux documents (6), (7) et (8) dont les références sont précisées à la fin de la présente description.

Pour des biopuces de basse densité, la lecture des zones de reconnaissance peut être effectuée avec des stations d'imagerie équipées de caméras à couplage de charge (CCD). Ces stations sont cependant mal adaptées aux puces à haute densité. En effet, les caméras CCD devraient présenter un nombre considérable de pixels de détection, et, comme les flux de lumière de fluorescence sont particulièrement faibles pour les puces à haute densité, les caméras devraient de plus être refroidies pour améliorer leur rapport de signal sur bruit.

Ainsi pour les puces de haute densité, on fait appel à des scanners à fluorescence permettant de balayer la puce pour en analyser successivement les zones de reconnaissance.

Ces scanners sont équipés d'un système optique confocal, associé à un capteur photoélectrique, pour enregistrer la fluorescence de chaque zone. Le scanner permet d'observer des objets avec une très bonne résolution spatiale (de 1 à 10μm) et le système optique confocal permet de s'affranchir des effets d'émissions lumineuses parasites (autofluorescence, réflexion spéculaire,...).

A titre d'illustration d'un scanner pour des puces de haute densité, on peut se reporter au document (4) dont la référence est également indiquée à la fin de la description.

Les scanners à fluorescence délivrent des signaux électriques dont on fait l'acquisition pour former une image, à deux dimensions, de la biopuce. Les signaux sont également exploités pour reconnaître la structure spatiale de la surface de la biopuce et pour repérer et délimiter les zones de reconnaissance qui s'y trouvent.

Enfin, l'intensité du signal pour chaque zone de reconnaissance est enregistrée comme résultat d'analyse.

Ces résultats d'analyse peuvent ensuite faire l'objet d'un traitement informatique adapté pour en tirer une information biologiquement ou chimiquement pertinente.

Il s'avère que le traitement des signaux indiqué ci-dessus présente l'inconvénient de nécessiter un grand nombre de points de mesure, ou de pixels, pour chaque zone de reconnaissance.

En effet, la délimitation précise de chaque zone de reconnaissance nécessite de disposer d'une densité de pixels-images suffisante pour chaque zone de reconnaissance.

On constate, de façon pratique, que pour effectuer un traitement du signal dans des conditions acceptables, un nombre de pixels de l'ordre de 36 à 64 est nécessaire pour chaque zone de reconnaissance, selon sa taille.

Ainsi, le traitement du signal pour des biopuces de haute densité requiert des moyens informatiques de traitement et de mémorisation considérables. Le traitement est donc coûteux.

En outre, la segmentation de l'image selon les zones de reconnaissance n'est pas parfaitement fiable.

Les documents (9) et (10), dont les références sont précisées à la fin de la présente description, décrivent d'autres possibilités de lecture d'une biopuce permettant d'éviter dans une certaine mesure les difficultés ci-dessus.

Le document (9) prévoit de mettre en place sur la puce des éléments de reconnaissance et de repérage permettant de faciliter la lecture, et permettant d'envisager la lecture de biopuces en utilisant des dispositifs de lecture, tels que les lecteurs de disques optiques compacts (CD-ROM).

En effet, dans le document (9), les auteurs décrivent un traitement biochimique de biopuces dans le but de les rendre lisibles sur un dispositif de lecture de diffusion grand public (notamment les lecteurs de disques optiques compacts CD-ROM). Avant l'analyse de l'échantillon contenant les molécules cibles à analyser, les zones de reconnaissance moléculaire de la biopuce sont recouvertes d'une pellicule réfléchissante formée par des billes métalliques ancrées à sa surface par des molécules "ponts". Ces billes réfléchissantes sont fonctionnalisées pour pouvoir également accrocher des molécules cibles de l'échantillon. Durant l'hybridation, une même molécule cible doit donc être accrochée en deux points : d'une part à la surface de la biopuce, sur les zones de reconnaissance moléculaire, et d'autre part sur la surface d'une des billes métalliques située au-dessus de cette zone de reconnaissance. Après hybridation, un traitement chimique approprié casse les molécules ponts ancrant les billes métalliques à la surface, et la surface de la biopuce est rincée. Seules les billes métalliques alors retenues à la surface par un nombre minimum de molécules cibles, restent présentes, et forment autant de "bits" d'information biologique.

Avec le traitement proposé dans le document (9), une étape biochimique supplémentaire est nécessaire à l'analyse. Celle-ci réside dans le clivage des molécules ponts. De plus, l'hybridation des molécules cibles sur les zones de reconnaissance est très ralentie par la présence des billes métalliques qui diminuent considérablement la vitesse de diffusion des molécules cibles vers la surface supportant les zones de reconnaissance. L'analyse risque donc d'être très lente. En outre, la relation qui existe entre le nombre de billes métalliques restant finalement accrochées à la surface et la concentration initiale de molécules cibles dans l'échantillon, n'est pas une relation permettant une quantification aisée. Il s'agit plutôt d'une relation en marche d'escalier. (Au-dessous d'un seuil, les billes ne restent pas accrochées ; au-delà, elles restent accrochées. La gamme dynamique dans laquelle le nombre de billes restantes est intermédiaire, et donc dans laquelle une quantification est possible, est probablement très faible.)

Selon le document (10), la biopuce est équipée de repères associés aux zones de reconnaissance. Ces repères sont cependant distincts des molécules de reconnaissance et physiquement séparés des zones de reconnaissance. Les repères peuvent être détectés indépendamment d'une réaction d'hybridation ou de complexation lors du balayage de la biopuce.

Dès lors que la position des repères est connue, on peut mesurer le temps écoulé entre la détection successive de deux repères pour établir une fonction reliant la position relative du scanner sur la biopuce. Cette fonction peut servir à déterminer avec plus de précision le lieu des zones de reconnaissance sur la biopuce.

L'utilisation de repères sur la biopuce permet en définitive d'améliorer la localisation des zones de mesure et en faciliter ainsi la lecture.

Toutefois, pour guider avec précision le système optique du scanner sur les zones de reconnaissance il convient de contrôler de façon suffisamment fine le déplacement relatif de la biopuce et/ou du système optique de lecture du scanner.

Ce contrôle ne pose pas trop de difficultés lorsque les zones de reconnaissance sont suffisamment grandes et peu nombreuses. Le déplacement relatif de la biopuce et du système optique peut être effectué efficacement avec des moyens mécaniques relativement peu coûteux.

Par contre, pour des puces de haute densité, dont les zones de reconnaissance présentent des dimensions qui n'excèdent pas quelques microns, des moyens mécaniques extrêmement précis sont indispensables pour garantir un balayage correct des zones de reconnaissance, et l'obtention d'une image nette et non déformée.

Des moyens mécaniques extrêmement précis sont également indispensables pour obtenir un balayage à vitesse régulière des zones de reconnaissance de petite taille afin de pouvoir corriger l'image obtenue, et exploiter l'image en fonction du déplacement.

A titre d'illustration, pour une puce de haute densité, comprenant par exemple 300x300 zones de reconnaissance adjacentes de 20µm de côté, et pour un échantillonnage de mesure typique de 7x7 points, il faut une résolution de déplacement de 3µm, une précision sur ce déplacement de 1µm (±0,5µm) et une répétabilité de positionnement de 1µm (±0,5µm). La vitesse de déplacement doit être constante et le parallélisme des déplacements pour le balayage doit être garanti à 0,3 mrad près. Une mécanique bas coût ne présente pas ces caractéristiques.

Par ailleurs, pour assurer la mise au point du système optique, avant la lecture de la puce, il faut orienter la puce dans l'espace et la déplacer avec une résolution de 10µm, une précision de 5µm environ et une répétabilité de l'ordre de 10µm. Ces caractéristiques sont indiquées pour une profondeur de section de 100µm du système optique. La réduction de la profondeur de section à 10µm impose alors, sur la mise au point, une résolution minimale de 2,5µm, une précision de 0,5µm et une répétabilité de 1µm.

L'exigence de moyens mécaniques de précision rend les dispositifs de lecture de biopuces particulièrement onéreux.

De plus, comme la surface des zones de reconnaissance des biopuces de haute densité est faible, il est nécessaire de balayer les biopuces de façon lente pour collecter une quantité d'énergie lumineuse suffisante pour chaque échantillonnage de chaque zone de reconnaissance.

Or, un balayage lent rend l'analyse de la biopuce exagérément long dès lors que celle-ci comporte un nombre élevé de zones de reconnaissance.

La quantité de lumière produite par la fluorescence peut être légèrement augmentée en excitant les marqueurs des molécules cibles au moyen de lasers puissants. Cependant, l'utilisation de tels équipements augmente encore le coût des dispositifs de lecture.

L'état de la technique est également illustré par les documents (11), (12) et (13). Le document (11) se rapporte à la détection et à la quantification de cellules, mais non à la reconnaissance moléculaire. Les documents (12) et (13) décrivent des systèmes de lecture avec des mécanismes de positionnement lents qui ne posent pas les problèmes d'une lecture "en temps réel".

Exposé de l'invention

Un but de la présente invention est de proposer un dispositif de lecture de biopuces ne présentant pas les difficultés mentionnées ci-dessus.

Un but est en particulier de proposer un tel dispositif qui soit d'un coût réduit et qui permette de lire des biopuces de haute densité.

Un but est aussi de proposer un tel dispositif permettant de balayer plus rapidement les puces, et de réduire ainsi le temps d'analyse, sans compromettre la qualité des mesures.

Un autre but est encore de proposer un dispositif capable de repérer rapidement la position et l'orientation d'une zone de reconnaissance sans effectuer une acquisition suréchantillonnée de l'image de la puce.

L'invention a également pour but de proposer une biopuce adaptée audit dispositif de lecture de façon à réduire au maximum le coût des mécanismes de balayage.

Pour atteindre ces buts, l'invention a plus précisément pour objet un dispositif de lecture en temps réel d'une biopuce comportant une pluralité de zones de reconnaissance et une pluralité de repères optiques de positionnement, les zones de reconnaissance comportant des fragments d'ADN ou d'ARN et occupant par rapport aux repères optiques de positionnement, des emplacements prédéterminés, le dispositif comportant :

- une tête optique apte à projeter sur la biopuce une lumière incidente,
- des moyens de déplacement relatif de la tête et de ladite biopuce, aptes à effectuer un balayage de la biopuce, et comportant des moyens de déplacement macroscopique (à grande échelle) et de moyens de déplacement microscopique (à petite échelle),

- un premier système optique, dit système d'analyse associé à ladite tête optique pour projeter sur au moins un premier capteur électrooptique une lumière susceptible de provenir des zones de reconnaissance,

- un deuxième système optique, dit système de positionnement, associé à la tête optique pour projeter sur au moins un deuxième capteur électrooptique une lumière susceptible de provenir d'au moins un repère de positionnement, et

- des moyens d'asservissement des moyens de déplacement de ladite tête optique pour contrôler les moyens de déplacement en fonction de signaux électriques du capteur électrooptique du système optique de positionnement, les moyens d'asservissement étant connectés aux moyens de déplacement microscopique, caractérisé par le fait que la tête optique (20) comporte une lentille (22) de focalisation et au moins un actionneur (24) de déplacement axial et/ou latéral de mise au point de la lentille (22), et comportant un troisième système optique (80), dit de mise au point, associé à la tête optique (20), pour projeter sur un troisième capteur électrooptique une lumière provenant de la réflexion de la lumière incidente sur la biopuce, et des moyens (70) d'asservissement de mise au point reliés à l'actionneur (24) pour contrôler le déplacement de mise au point de la lentille.

Dans la suite du texte, l'expression "lumière susceptible de provenir des molécules marquées ..." sera employée par commodité pour désigner la lumière susceptible d'être émise en fluorescence, ou réfléchie, ou diffusée, ou réfractée depuis les zones de reconnaissance, en réponse à la lumière incidente, par exemple par des groupements spécifiques équipant des molécules marquées ou non.

Des déplacements microscopiques sont utilisés pour affiner la position de la tête optique selon au moins un des trois axes. (Un premier axe correspondant à l'axe optique du premier système optique, et deux axes perpendiculaires au premier axe).

On entend par zone de reconnaissance une portion de la biopuce qui présente à sa surface des molécules présentant une propriété de reconnaissance d'un type donné de molécules cibles.

L'asservissement du balayage de la tête optique aux signaux électriques du système de positionnement permet de corriger en temps réel le déplacement relatif de la puce et de la tête optique, et d'obtenir un positionnement extrêmement précis avec des moyens mécaniques de déplacement peu coûteux. En particulier, il devient possible d'utiliser des moyens mécaniques tels que les actionneurs qui équipent usuellement les lecteurs de disques compacts.

L'asservissement permet en outre d'obtenir un déplacement relatif homogène en vitesse en vue d'une lecture en continu de la fluorescence des zones de reconnaissance.

Il convient à ce sujet de préciser que le système optique de positionnement, associé aux moyens d'asservissement, constitue un moyen permettant la lecture en temps réel de la biopuce. En d'autres termes, ce moyen permet de connaître en temps réel la position de lecture par rapport aux zones de reconnaissance et/ou aux repères optiques de positionnement.

De plus, la précision de la mise au point obtenue par l'asservissement permet d'utiliser un système optique confocal avec une faible profondeur de section de façon à réduire l'influence d'une lumière parasite provenant du substrat de la biopuce. Ainsi une meilleure dynamique de signal peut être obtenue.

Les systèmes optiques du dispositif de lecture, affranchis de la lumière parasite, grâce à une faible profondeur de section, peuvent être réalisés avec une ouverture numérique plus grande et collecter par conséquent davantage de lumière. Une lecture plus rapide est par conséquent possible et/ou la source de lumière incidente peut être moins puissante.

Grâce aux moyens d'asservissement de la mise au point, la lecture des zones de reconnaissance peut être effectuée de façon continue en même temps que la mise au point. Cette caractéristique permet en outre de ne pas perdre le repérage sur la biopuce et permet d'augmenter la précision des mesures, indépendamment des conditions de balayage.

Selon une réalisation particulière simplifiée du dispositif, celui-ci peut comporter un système optique unique incluant les premier et deuxième systèmes optiques et au moins un capteur électrooptique commun aux premier et deuxième systèmes optiques, ledit capteur optique commun recevant non seulement la lumière provenant des zones de reconnaissance moléculaire, mais encore la lumière provenant des repères de positionnement. Le capteur commun est alors relié à un système de traitement du signal et aux moyens d'asservissement du balayage de la tête optique.

Dans cette réalisation, le capteur optique commun délivre par conséquent des signaux qui servent à la fois à l'analyse de la fluorescence et à l'asservissement du déplacement relatif de la puce et de la tête optique (balayage).

L'invention concerne également une biopuce comportant une pluralité de zones de reconnaissance et une pluralité de repères optiques de positionnement.

Conformément à l'invention, les zones de reconnaissance sont superposées, en tout ou partie, aux repères optiques de positionnement de façon à recouvrir tout ou partie desdits repères.

Les repères optiques de positionnement, associés aux zones de reconnaissance, comportent par exemple des plages réfléchissant la lumière d'excitation. Ils permettent d'orienter la biopuce, de repérer les emplacements des zones de reconnaissance, et d'effectuer un balayage précis, indépendamment du fait qu'une hybridation ait eu lieu ou non. Les repères optiques de positionnement peuvent se présenter en particulier sous la forme de pistes dites pistes de guidage.

Selon un aspect particulier, les repères de positionnement peuvent être conçus de façon à présenter pour la lumière de lecture incidente une certaine réflectivité, différente de celle des zones de reconnaissance qui sont adjacents.

Selon une possibilité particulière de réalisation de la puce, un repère optique peut être respectivement associé à chaque zone de reconnaissance. Il n'est ainsi pas nécessaire de former une image de l'ensemble de la biopuce pour connaître l'emplacement de chaque zone.

Ainsi, la possibilité de déterminer précisément l'emplacement des zones de reconnaissance permet d'effectuer des mesures précises, sans sur-échantillonnage, et avec un nombre de pixels réduit pour chaque zone de reconnaissance.

En outre, dès lors que chaque zone de reconnaissance est repérée, il est possible d'effectuer une analyse locale pour une ou plusieurs zones données en déplaçant la tête optique ou la puce, de façon à diriger directement la tête en face de la ou des zones souhaitées.

Plusieurs possibilités sont offertes pour enregistrer la lumière provenant des zones de reconnaissance de la puce.

Selon une première possibilité on peut immobiliser la tête optique en face d'une zone de reconnaissance et effectuer une acquisition du signal pendant un temps déterminé, puis passer à une zone suivante.

Comme indiqué précédemment, les repères optiques et les moyens d'asservissement permettent de positionner la tête avec suffisamment de précision pour qu'une analyse fiable puisse être effectuée. De plus, les repères optiques permettent de localiser précisément une zone de reconnaissance même dans un cas où celle-ci n'émet aucune lumière de fluorescence.

Les signaux de capteurs peuvent aussi être acquis "à la volée", en déplaçant continûment la tête optique le long d'une pluralité de zones de reconnaissance placées côte à côte de sorte que les zones de reconnaissance constituent un recouvrement de la surface active de la biopuce, par exemple par juxtaposition. Dans ce cas on intègre les signaux pour déterminer la quantité de lumière reçue pendant le temps mis pour balayer une ou plusieurs zones de reconnaissance.

Des fluctuations de la vitesse de déplacement sont cependant susceptibles d'affecter l'analyse de la quantité de lumière émise par unité de temps par les zones de reconnaissance.

Ainsi, selon une deuxième possibilité d'analyse, on peut normaliser les signaux acquis en fonction d'un temps s'écoulant entre le passage de la tête optique en face de repères de positionnement successifs associés aux zones de reconnaissance parcourues.

Selon une troisième possibilité correspondant également à une acquisition "à la volée", on peut asservir continûment la vitesse de déplacement relatif de la tête optique et de la puce en chronométrant le temps écoulé entre le passage de la tête en face des repères successifs.

L'invention concerne encore une biopuce apte à être lue par un dispositif tel que décrit précédemment, dans laquelle les zones de reconnaissance moléculaire sont superposées en tout ou partie aux repères de positionnement, de façon à les recouvrir partiellement ou totalement.

Cette caractéristique est particulièrement avantageuse car elle évite un encombrement de la surface de la biopuce par les repères de positionnement. Elle permet en effet, de laisser une plus grande partie, voire l'ensemble, de la surface de la puce disponible pour les zones de reconnaissance moléculaire.

Les repères de positionnement permettent d'orienter la biopuce mais aussi de repérer et d'identifier les zones de reconnaissance. A cet effet, celles-ci occupent de préférence, par rapport aux repères de positionnement des emplacements prédéterminés.

Des repères de positionnement très fins peuvent suffire pour positionner la biopuce et/ou identifier les zones de reconnaissance.

Il s'avère toutefois qu'une bonne précision n'est obtenue qu'avec des repères de positionnement dont la surface n'est pas négligeable devant celle des zones de reconnaissance moléculaire auxquelles ils sont associés.

La caractéristique selon laquelle les repères de positionnement sont disposés de façon à être chevauchés en tout ou partie par les zones de reconnaissance moléculaire permet d'augmenter leur surface, et ainsi améliorer l'asservissement du positionnement de la biopuce par rapport au dispositif de lecture. La précision de la lecture est également augmentée.

Lorsque les repères de positionnement se présentent sous la forme de pistes de guidage, destinées à être suivies par un pinceau de lumière incident pour l'asservissement du positionnement, il est souhaitable que la largeur de la piste ne soit pas négligeable devant la largeur du pinceau de lumière.

Un repérage de la piste avec une excellente précision peut être obtenu avec des repères de positionnement dont la surface occupe de l'ordre de 30% à 100% de la surface totale de la puce.

En raison du coût de fabrication des biopuces, rapporté à leur surface utile, le chevauchement des zones de reconnaissance et des repères de positionnement apparaît de plus comme un avantage économique.

En outre, l'augmentation de la surface des repères de positionnement en facilite la lecture et permet d'utiliser des dispositifs de lecture avec une puissance lumineuse moindre et avec une moindre sensibilité.

Ceci réduit alors également le coût des dispositifs de lecture.

Enfin, la possibilité d'utiliser une source de lumière de moindre intensité pour le positionnement, réduit les risques d'inhiber ou de brûler les marqueurs fluorescents susceptibles d'être présents sur les zones de reconnaissance moléculaire.

Par ailleurs, les repères de positionnement peuvent être conçus pour être sensiblement transparents à au moins une lumière de fluorescence susceptible d'être émise depuis les zones de reconnaissance en réponse à au moins une lumière incidente de lecture.

Lorsque le faisceau laser effectue une lecture par la face arrière, la réflectivité des repères de positionnement et/ou d'une interface entre le matériau de garniture des zones de reconnaissance et les repères de positionnement peut être choisie pour être supérieure à 0%, préférentiellement comprise entre 1 et 10% et plus précisément entre 1 et 5%.

Lorsque le faisceau laser effectue une lecture par la face avant, la réflectivité des repères de positionnement et/ou d'une interface entre le matériau de garniture des zones de reconnaissance et les repères de positionnement peut être choisie pour être supérieure à 0% soit entre 1 et 100%.

On entend par face avant et arrière de la biopuce respectivement la face garnie des molécules de reconnaissance dans les zones de reconnaissance (face avant) et la face opposée libre (face arrière).

Par ailleurs, la biopuce peut comporter entre les repères de positionnement et les zones de reconnaissance une couche intercalaire en un matériau présentant une réflectivité différente de celle des repères de positionnement. La couche intercalaire permet alors d'obtenir une réflexion déterminée de la lumière incidente sur les repères de positionnement, indépendamment de la garniture des zones de reconnaissance moléculaire, et indépendamment du milieu liquide ou gazeux, avec lequel la biopuce est mise en contact.

Différentes possibilités sont envisageables pour la réalisation de repères de positionnement. Ceux-ci peuvent en particulier comporter une succession de régions présentant alternativement différentes propriétés pour la lumière incidente.

Selon une première possibilité des régions adjacentes des repères de positionnement peuvent présenter respectivement une différence de chemin optique pour la lumière incidente. La différence de chemin optique peut être obtenue en particulier en réalisant les régions adjacentes en des matériaux différents et/ou avec des épaisseurs différentes, et/ou avec des dopages différents. Le choix de matériau ou de dopages différents pour les régions adjacentes, leur confère des indices de réfraction différents.

Selon une autre possibilité pour la réalisation des repères de positionnement ceux-ci peuvent comporter des plages de matériau biréfringeant susceptibles de modifier l'orientation de la polarisation d'une lumière de lecture incidente polarisée.

Selon encore une autre possibilité, des régions adjacentes des repères de positionnement peuvent être réalisées respectivement en des matériaux présentant des réflectivités différentes.

D'autres caractéristiques et avantages de la présente invention ressortiront mieux de la description qui va suivre, en référence aux figures des dessins annexés. Cette description est donnée à titre purement illustratif et non limitatif.

Brève description des figures

- La figure 1 est une représentation schématique simplifiée d'un dispositif de lecture conforme à l'invention.
    La figure 2 est une représentation schématique particulière d'un détail de la figure 1.
- La figure 3 est une vue de dessus, schématique et simplifiée, d'une biopuce conforme à l'invention apte à être lue par le dispositif de la figure 1.
- La figure 4 est une vue de dessus, schématique et simplifiée, d'une biopuce conforme à l'invention, et illustre un exemple de séquence de lecture d'une telle puce.
- Les figures 5 à 9 sont des coupes schématiques simplifiées de parties de biopuces conformes à l'invention, illustrant d'autres possibilités de réalisation.

Description détaillée de modes de mise en oeuvre de l'invention

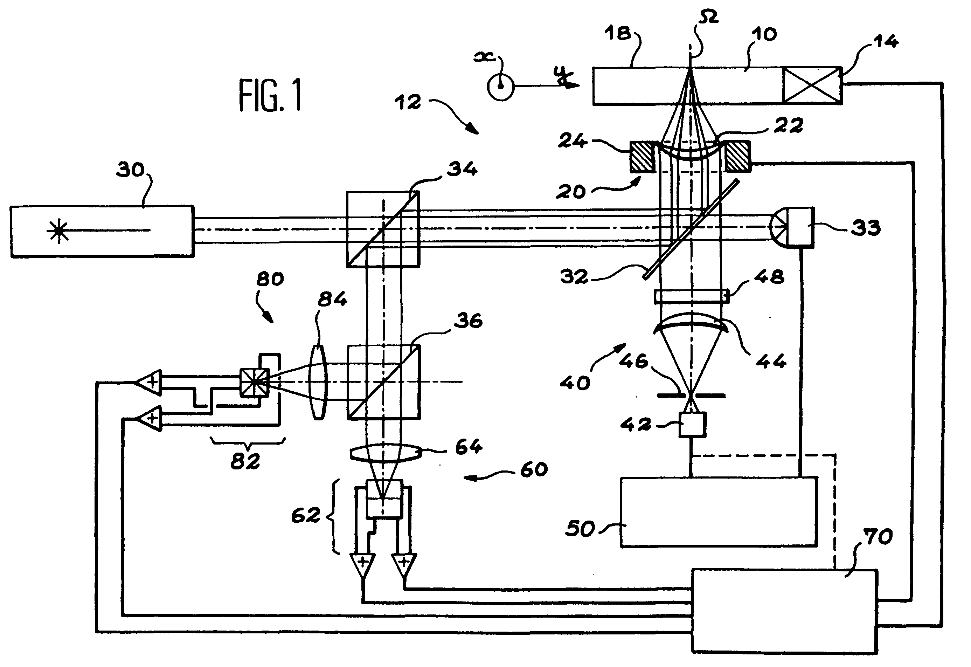

La référence 10 sur la figure 1 désigne une biopuce comportant une pluralité de zones de reconnaissance équipées de molécules de reconnaissance spécifiques, et éventuellement des pistes de guidage et/ou des repères optiques de positionnement associés aux zones de reconnaissance. Ces éléments sont décrits plus en détail dans la suite du texte et ne sont pas représentés sur la figure 1 pour des raisons de simplification.

Dans l'exemple décrit, les molécules de reconnaissance spécifique sont marquées par des groupements fluorescents, mais ceux-ci peuvent être remplacés par des groupements pouvant réfléchir, diffuser ou diffracter la lumière, sans sortir du cadre de l'invention.

La puce est disposée en face d'un dispositif de lecture 12. Ce dispositif est destiné à balayer les zones de reconnaissance pour exciter des molécules, portant des marqueurs fluorescents, fixées sur les zones de reconnaissance, et pour enregistrer une lumière de fluorescence produite par ces molécules.

Le balayage des zones de reconnaissance est effectué par un déplacement relatif entre le dispositif de lecture 12, ou une partie de celui-ci, et la biopuce 10.

Dans l'exemple de la figure 1 le déplacement macroscopique relatif est obtenu au moyen d'actionneurs 14, par exemple, des actionneurs à moteurs qui déplacent la biopuce 10. Un déplacement microscopique de la lentille 22 est obtenu au moyen d'un actionneur électromagnétique 24. La biopuce, de format rectangulaire, est déplacée dans un plan perpendiculaire à un axe optique $\Omega$ du dispositif de lecture.

Ce plan est également perpendiculaire au plan de la figure.

Le déplacement peut avoir lieu selon deux directions x et y perpendiculaires indiquées sur la figure.

Le dispositif de lecture 12 comporte une tête optique 20 avec une lentille de focalisation 22 présentant un axe optique $\Omega$. La lentille de la tête optique a une double fonction de diriger vers la biopuce une lumière d'excitation et de recueillir une lumière de fluorescence émise en réponse à la lumière d'excitation.

La lumière d'excitation est une lumière monochromatique, présentant une première longueur d'onde, par exemple de l'ordre de 633 nm. Elle est fournie par un laser 30 dont le faisceau est dirigé vers la tête optique 20 par l'intermédiaire d'un miroir dichroïque 32. La lentille de focalisation 22 est prévue pour focaliser le faisceau sur une face arrière 18, dite face active, de la biopuce.

Le miroir dichroïque 32 réfléchit une partie majoritaire (80 à 95%) de la lumière du laser vers la lentille de focalisation. La partie restante de la lumière (5 à 20%) traverse le miroir 32 pour être recueillie par un capteur électrooptique 33 appelé capteur de référence.

Le capteur de référence 33 permet de mesurer les fluctuations temporelles de l'intensité du faisceau émis par le laser 30. Cette mesure est prise en compte pour l'analyse de la fluorescence émise par la biopuce afin d'affranchir l'analyse des variations d'intensité dues au laser.

Un premier système optique d'analyse 40 est associé à la tête optique, et aligné sur l'axe optique $\Omega$ pour projeter une lumière de fluorescence produite par des molécules marquées excitées, éventuellement présentes sur la biopuce, sur un (ou plusieurs) capteur(s) électrooptique(s) 42, appelé(s) capteur(s) d'analyse dans la suite du texte.

De façon plus précise, la lumière de fluorescence est recueillie et collimatée par la lentille de focalisation 22 de la tête optique 20, pour former un faisceau. Ce faisceau traverse le miroir dichroïque 32 puis traverse une lentille de convergence 44 qui le fait converger sur un diaphragme 46. Le diaphragme peut être formé en pratiquant un petit trou dans un écran opaque. Il permet d'effectuer un filtrage spatial selon l'axe optique $\Omega$ et confère au système optique un caractère confocal.

En effet, le diaphragme, conjugué avec l'objet ponctuellement éclairé, ne laisse passer que de la lumière issue de la zone éclairée (par la lumière d'excitation) dans une fine "tranche" assimilable à un plan objet. L'attrait d'un système confocal est évident notamment pour la lecture de puces à ADN. La possibilité de définir une "tranche" de l'espace objet, est mise à profit pour isoler un plan d'intérêt contenant les zones de reconnaissance moléculaire, du reste de la puce (support en verre, tampons). La lumière reçue est donc libre d'une lumière parasite provenant d'éventuels centres colorés du support, et libre d'un fond continu lumineux.

Le phénomène de fluorescence des marqueurs fluorescents, portés par les molécules cibles retenues sur les zones de reconnaissance, se traduit par une conversion de la lumière d'excitation en une lumière présentant une longueur d'onde supérieure à celle de la lumière d'excitation.

La longueur d'onde de la lumière de fluorescence est par exemple de 670 nm dans l'exemple décrit.

Un filtre interférentiel 48 est disposé entre la lentille de focalisation 22 de la tête optique et la lentille de convergence 44. Il permet d'isoler dans la lumière reçue par le système optique d'analyse une bande spectrale correspondant sensiblement à la bande spectrale de fluorescence. Les lumières parasites sont ainsi davantage éliminées.

La référence 50 désigne une unité de traitement des signaux délivrés par le capteur d'analyse 42. Dans l'exemple décrit, le capteur d'analyse 42 est un capteur à photomultiplicateur qui délivre un signal analogique proportionnel à l'intensité de la lumière de fluorescence reçue.

Le signal du capteur d'analyse peut être intégré pendant une durée de temps lors de laquelle la tête optique reçoit la lumière d'une zone de reconnaissance donnée. Comme évoqué précédemment, le signal peut également être enregistré dans un procédé de mesure "à la volée" lors d'un balayage de la puce. Le signal peut aussi être numérisé de façon à pouvoir le traiter selon des algorithmes adaptés au type d'analyse effectué.

On observe que l'unité de traitement 50 reçoit également un signal de référence provenant du capteur de référence 33. La prise en compte du signal de référence permet de normaliser les signaux délivrés par le capteur d'analyse qui sont, comme évoqué ci-dessus, affranchis des fluctuations de l'intensité du laser.

Le miroir dichroïque 32, associé à un cube séparateur 34 permet de diriger vers un deuxième système optique 60 de la lumière provenant d'une réflexion, ou diffraction, ou réfraction ou une diffusion de la lumière incidente du laser sur la biopuce. Cette lumière réfléchie provient, par exemple, des pistes de guidage et/ou de repères de positionnement ménagées sur la biopuce. Dans le cas où la biopuce ne comporte pas de pistes de guidage, la biopuce peut être déposée sur une platine comportant des pistes de guidage.

Le deuxième système optique 60, appelé système de positionnement, comporte une lentille 64 permettant de focaliser la lumière reçue sur au moins un capteur électrooptique 62, tel que des détecteurs à quatre quadrants, ou multiquadrants, associés à un système optique astigmatique d'analyse du faisceau. Le capteur électrooptique 62 peut aussi comporter une barrette CCD, ou une photorésistance différentielle ou tout système de mesure de positionnement.

Le capteur électrooptique du système de positionnement est relié à une unité 70, appelée unité d'asservissement. L'unité d'asservissement permet, par exemple, de décoder les signaux du capteur pour détecter le passage de la tête optique en face d'un repère de positionnement, de compter les repères de positionnement rencontrés, et de piloter le déplacement du balayage pour suivre une série de repères correspondant à une série de zones de reconnaissance. A cet effet, l'unité d'asservissement 70 est connectée aux actionneurs 14 et/ou 24 pour contrôler les mouvements de la biopuce et/ou de la lentille 22. Elle permet aussi de maintenir dynamiquement la tête optique le long d'une trajectoire de balayage imposée par des repères disposés sur la biopuce.

A titre d'exemple, les actionneurs peuvent être contrôlés de telle façon que l'intensité de la lumière reçue par le capteur du système optique de positionnement soit comprise dans une plage de valeurs déterminées. Le point de fonctionnement correspond à un état d'équilibre. On donne une consigne de position et le système d'asservissement maintient cette consigne. On cherchera par exemple, à ce que la répartition de l'intensité de lumière sur le détecteur multiquadrants soit toujours la même.

Un deuxième cube séparateur 36, disposé dans le deuxième système optique, permet de diriger une partie de la lumière de ce système optique dans un troisième système optique 80, appelé, système de mise au point.

Le système optique de mise au point 80 comprend une lentille 84 pour focaliser la lumière reçue sur un capteur électrooptique 82 tel qu'un détecteur à quatre quadrants, ou multiquadrants, associé à un système optique astigmatique d'analyse du faisceau, ou une barrette CCD, ou une photorésistance différentielle ou tout système de mesure de position.

La lumière dirigée sur le capteur du système optique de mise au point provient d'une réflexion de la lumière du laser sur la biopuce. Elle peut provenir en particulier des repères de positionnement ou d'une réflexion vitreuse sur la face active de la biopuce.

Le capteur 82 du système optique 80 de mise au point est également relié à l'unité d'asservissement 70. Cette unité est conçue pour piloter un actionneur 24 solidaire de la lentille 22 de la tête optique 20. L'actionneur 24 permet de déplacer la lentille 22 selon son axe Ω de façon à corriger continûment la mise au point des systèmes optiques sur la biopuce, ou plus précisément sur certaines parties de la biopuce.

A titre d'exemple, l'unité d'asservissement peut être prévue pour provoquer un déplacement de la lentille 22 de la tête optique de telle façon que la surface d'une tache de focalisation sur le capteur du système de mise au point soit contrôlée par rapport à la surface (forme et/ou position) d'une tache de référence (par exemple circulaire).

Selon un mode de réalisation simplifié le capteur électrooptique du premier système optique 40, c'est-à-dire le système optique d'analyse, peut être utilisé à la fois pour délivrer des signaux électriques correspondant à la lumière provenant des zones de reconnaissance et des signaux correspondant à de la lumière réfléchie ou diffusée par les pistes de guidage et/ou les repères de positionnement.

Dans ce cas, le capteur est relié non seulement à l'unité 50 de traitement des signaux mais aussi, comme le montre la figure en trait discontinu, à l'unité d'asservissement 70, pour piloter le déplacement relatif de la puce et de la tête optique, et éventuellement pour la mise au point de la lentille de la tête optique.

Dans ce mode de réalisation, le dispositif de lecture comporte un système optique unique qui inclut de façon fonctionnelle les premier, deuxième (et éventuellement troisième) systèmes optiques décrits précédemment.

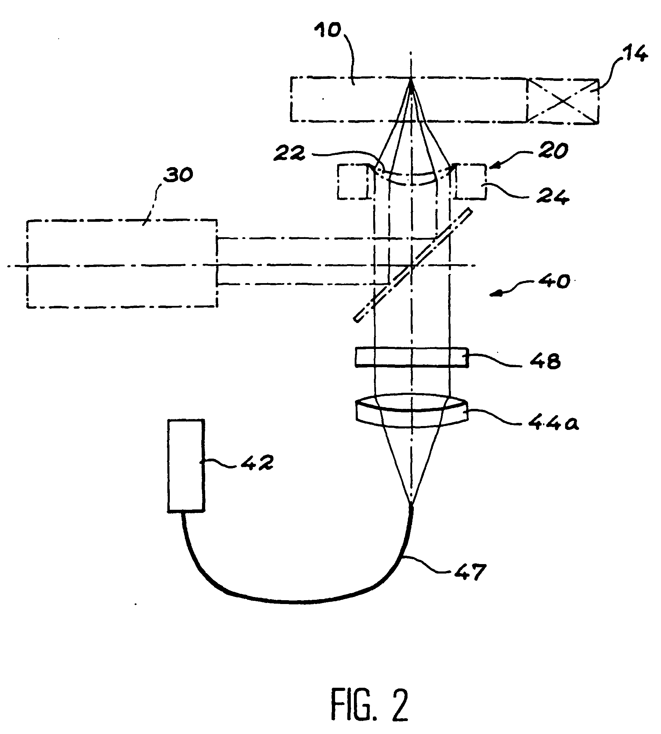

La figure 2 montre une réalisation particulière du système optique d'analyse.

Pour des raisons de simplification, la figure 2 ne représente qu'un détail du dispositif, les autres éléments étant identiques à ceux décrits en référence à la figure 1.

Le système optique d'analyse 40 de la figure 2 comporte un filtre interférentiel 48, et un objectif de focalisation 44a prévu pour focaliser un faisceau de lumière de fluorescence reçu de la tête optique 20 sur une première extrémité d'une fibre optique 47.

Une deuxième extrémité de la fibre optique 47 est reliée à un capteur électrooptique 42, pour un photomultiplicateur ou une photodiode à avalanche. La fibre optique 47 (faiblement multimode) joue le rôle du diaphragme confocal 46 visible sur la figure 1.

Les systèmes optiques d'analyse des figures 1 et 2 sont, comme indiqué ci-dessus, des systèmes confocaux.

Les principales qualités d'un système confocal sont sa grande résolution spatiale et sa grande résolution axiale. La résolution axiale traduit la capacité du système à isoler un très petit volume d'observation autour du plan de focalisation, c'est-à-dire la capacité à éliminer les lumières parasites de l'extérieur de ce volume. Elle est caractérisée par une "profondeur de section" du système notée Pds.

La profondeur de section Pds, déjà évoquée précédemment, peut être exprimée selon la formule suivante :

$$Pds = \frac{0{,}443.\lambda}{1 - \cos u}$$

où $\lambda$ est la longueur d'onde exprimée en micromètres et u le demi-angle du cône d'ouverture numérique du système optique.

Les lentilles mises en oeuvre pour réaliser le système optique d'analyse présentent des ouvertures numériques de l'ordre de 0,4 à 0,5. Ainsi, des profondeurs de section de l'ordre de 1,8 à 2,8μm peuvent être obtenues. De plus, 16 à 22% du flux lumineux émis par la biopuce sont collectés par la lentille.

Il convient à présent de décrire plus en détail un exemple de réalisation d'une biopuce adaptée au dispositif de lecture.

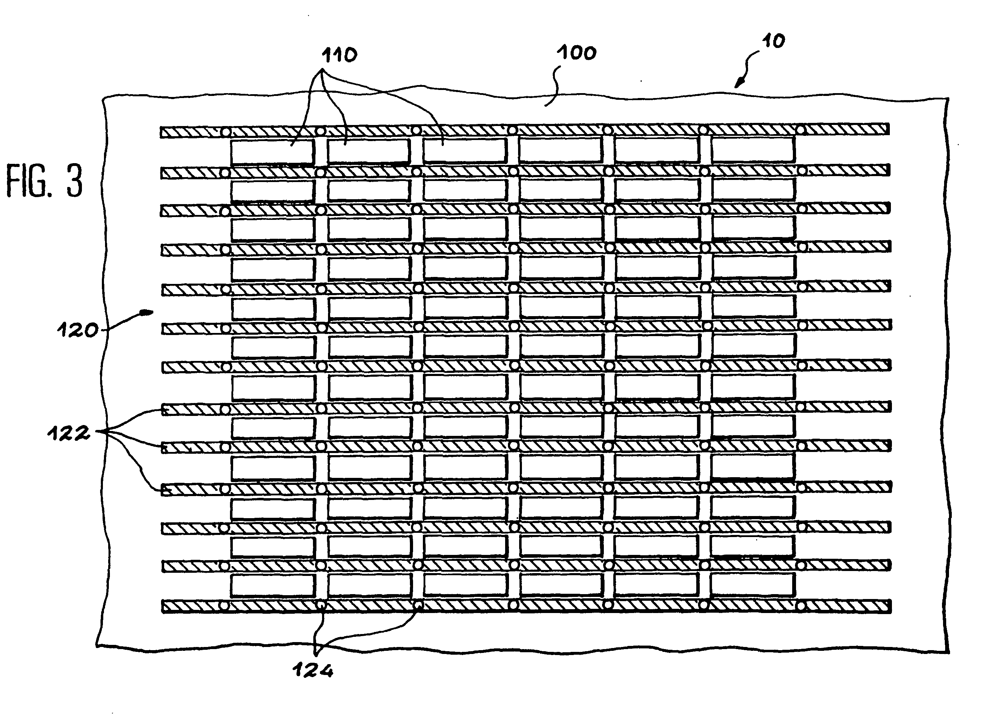

La figure 3 montre une telle biopuce. La biopuce 10 comprend un support 100 sur lequel sont ménagées des zones de reconnaissance 110. Les zones 110 coïncident par exemple avec des électrodes formées à la surface du support. Ces électrodes ont été sélectivement garnies avec un revêtement susceptible d'interagir avec un composé chimique ou biologique donné. Comme évoqué dans la partie introductive du texte, la garniture peut en particulier comporter des molécules de reconnaissance susceptibles de s'hybrider avec des molécules cibles.

Les différentes zones de reconnaissance 110 sont garnies respectivement de molécules de reconnaissance différentes, spécifiques pour des molécules cibles données.

Chaque zone de reconnaissance comporte un seul type de molécules identiques. Les molécules d'une même zone sont préférentiellement différentes des molécules de toutes les autres zones.

On observe que les zones de reconnaissance 110, de forme rectangulaire, sont agencées en lignes et en colonnes. D'autres motifs de répartition à la surface du substrat, par exemple en cercle, sont cependant envisageables.

La biopuce 10 comporte également un réseau 120 de repères optiques de positionnement, associé aux zones de reconnaissance. Dans l'exemple illustré, ce réseau comporte des pistes de guidage 122 sous la forme de bandes rectilignes s'étendant respectivement entre des lignes successives de zones de reconnaissance.

Les pistes de guidage sont des pistes réfléchissantes ou partiellement réfléchissantes, fluorescentes ou diffusantes, capables de renvoyer vers le dispositif une partie de la lumière d'excitation. Elles peuvent être également déphasantes, c'est-à-dire qu'elles créent une différence de marche lors de la propagation de l'onde retour. La lumière d'excitation renvoyée vers le dispositif est analysée par le deuxième et éventuellement le troisième systèmes optiques pour localiser et repérer les lignes de zones de reconnaissance et pour assurer le balayage de la biopuce. Les pistes réfléchissantes peuvent également comporter une surface structurée avec des gravures déphasantes susceptibles de former des figures d'interférence, ou d'introduire un déphasage dans la lumière d'excitation. Ces figures d'interférence ou de déphasage, reçues par le système optique de positionnement du dispositif de lecture peuvent également servir au repérage ou à l'asservissement du balayage.

Les repères de positionnement comportent également des plages optiques 124 appelées codeurs.

Les codeurs 124 sont de préférence situés sur les pistes de guidage 122 au début et à la fin de chaque zone de reconnaissance selon un pas correspondant à la taille desdites zones.

Dans une réalisation particulière, les codeurs peuvent être conçus pour réfléchir faiblement la lumière.

Les codeurs sont par exemple des plages correspondant à une interruption du matériau réfléchissant ou une interruption de la surface structurée des pistes de guidage 122.

Selon encore une autre possibilité, les pistes peuvent être faiblement réfléchissantes et s'étendre le long de rangées de zones de reconnaissance. Elles comportent, par exemple des plages (ou codeurs) non réfléchissantes.

On considère qu'une surface est faiblement réfléchissante lorsque le pourcentage de lumière réfléchie est inférieur à 50% et de préférence inférieur à 5%.

Selon une variante, la puce peut également être équipée des seules pistes de guidage qui sont alors des plages réfléchissantes, par exemple.

L'association de codeurs ou plus généralement de repères optiques à chaque zone de reconnaissance permet une localisation particulièrement rapide et précise des zones.

Toutefois, il est également possible d'associer un seul repère à un ensemble de zones de reconnaissance ; par exemple, un repère pour chaque ligne ou colonne de zones de reconnaissance.

La fabrication des repères fait appel à des techniques classiques de la micro-électronique. Elle comporte par exemple le dépôt en pleine plaque d'une couche métallique réfléchissante tel qu'une couche d'aluminium, de nickel ou de chrome, et la mise en forme par photolithogravure de cette couche selon un motif correspondant aux emplacements souhaités des repères de positionnement.

A titre d'exemple, la couche métallique peut être gravée selon un procédé de gravure chimique en phase liquide ou un procédé de gravure à plasma en phase gazeuse, et selon un motif de gravure déterminée par un masque de gravure en résine.

Après la gravure et l'élimination de la résine, une fine couche de silice peut être formée sur le support afin d'améliorer la compatibilité de la surface avec le greffage de molécules biologiques.

Il convient de préciser que les zones de reconnaissance ne sont pas nécessairement adjacentes et que les repères optiques ne sont pas nécessairement positionnés à la périphérie des zones de reconnaissance.

Selon une possibilité d'agencement, non représentée, des repères optiques réfléchissants peuvent être ménagés à l'intérieur des zones de reconnaissance.

Une telle configuration n'est pas gênante quand la lumière provenant des zones de reconnaissance est une lumière de fluorescence. En effet, dans la mesure où la distinction entre la lumière de fluorescence et la lumière réfléchie par les zones de reconnaissance est faite sur la base de la différence de longueur d'onde entre ces lumières.

Dans le cas d'une détection de molécules non fluorescentes, mais par exemple diffusantes ou diffractantes, la distinction peut être faite par un codage des signaux en fréquence ou en réalisant la mesure à un angle différent de celui utilisé pour les asservissements de position.

Après l'achèvement des repères optiques, les zones de reconnaissance peuvent être garnies des molécules de reconnaissance. La synthèse de ces molécules et leur fixation sur les zones de reconnaissance ont lieu selon des techniques de synthèse par photolithographie connues en soi.

On peut remarquer que la surface de la biopuce n'est pas parfaitement plane. Elle présente une sur-épaisseur de l'ordre de 50 nm à 200 nm à l'endroit des plages réfléchissantes des repères optiques.

De telles différences d'épaisseur restent faibles comparativement à la profondeur de section du système optique d'analyse proposé.

La réalisation des repères optiques et la synthèse des molécules de reconnaissance sont des opérations qui peuvent avoir lieu collectivement pour une pluralité de biopuces, sur une plaquette de silicium ou de verre (wafer). Cette plaquette est ensuite découpée pour individualiser les biopuces fabriquées simultanément.

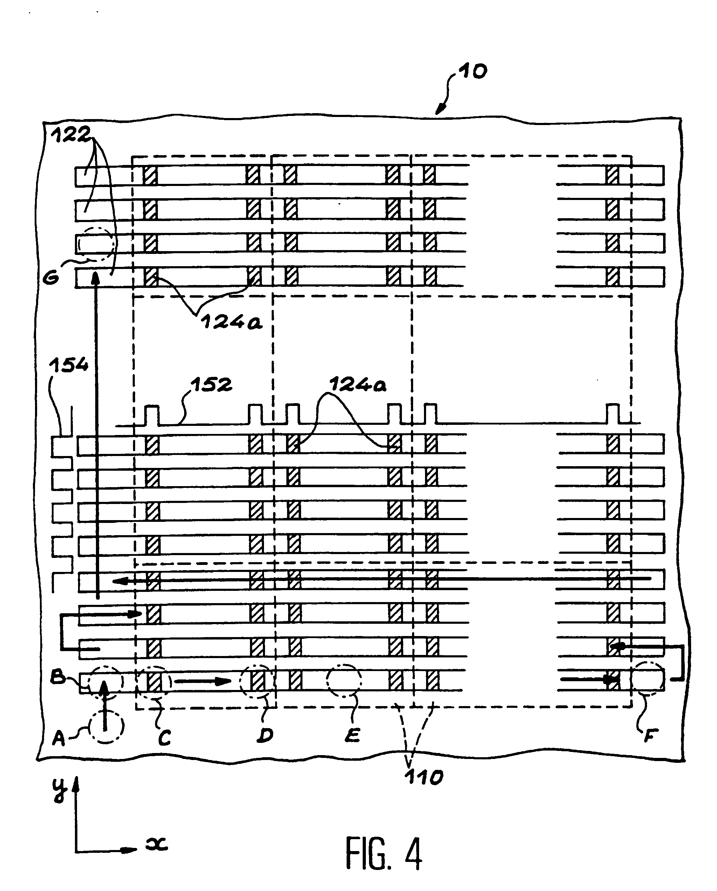

La figure 4 représente également une biopuce 10 avec des pistes de guidage 122 et des repères de positionnement optiques sous la forme de codeurs 124a en un matériau réfléchissant (Cr par exemple) ménagés le long des pistes 122.

Sur la surface de la puce on peut distinguer une pluralité de zones de reconnaissance ou cellules 110, de forme carrée, repérées par des lignes en trait discontinu. Chaque zone de reconnaissance est traversée par quatre pistes de guidage.

De façon schématique on indique sur la figure 4, en trait mixte, les positions successives d'un spot de lumière d'excitation. Les positions sont repérées par des lettres alphabétiques A à G.

Les moyens de déplacement de la puce (actionneur) sont tels que le mouvement du spot de lumière peut être décomposé selon un mouvement suivant un premier axe x, appelé axe rapide, et suivant un deuxième axe y, appelé axe lent.

Un exemple de procédure de lecture d'une biopuce est indiqué dans le tableau I qui doit être lu en conjonction avec les lettres d'indication de position du spot sur la figure 4.

Le tableau I indique, en particulier pour chaque position, le mouvement effectué et précise l'activation des fonctions de mise au point, de positionnement et de lecture (analyse).

TABLEAU I

| Opéra-tions | Description | Fonctions | | |
|---|---|---|---|---|
| | | Asservissement mise au point | Asservissement Positionnement | Mesure |
| A | Translation suivant l'axe lent<br>Spot sur un coin de la puce<br>Recherche de la mise au point | NON→OUI | NON | NON |
| B | Translation suivant l'axe lent<br>Recherche du début de la piste n°1 | OUI | NON→OUI | NON |
| C | Translation suivant l'axe rapide<br>Repérage du début de la cellule n° 1⇒début de la mesure | OUI | OUI | NON→OUI |
| D | Translation suivant l'axe rapide<br>Repérage de la fin de la cellule n° 1⇒fin de la mesure | OUI | OUI | OUI→NON |
| E | translation suivant l'axe rapide<br>Mesure de la fluorescence dans la cellule n° 2 | OUI | OUI | OUI |
| F | Translation suivant l'axe lent<br>Recherche de la piste 2 | OUI | NON→OUI | NON |
| G | positionnement sur une piste donnée<br>Translation suivant l'axe lent<br>Comptage du nombre de pistes qui défilent | OUI | NON→OUI | NON |

EP 1 119 769 B1

EP 1 119 769 B1

Les indications "piste 1", "piste 2" indiquent dans l'ordre les pistes 122 dans la direction y à partir du bas de la figure et les indications "cellule n°1", "cellule n°2" indiquent les zones de reconnaissance successives dans la direction x à partir de la partie gauche de la figure.

Les références 152, 154 sur les figures représentent à titre indicatif un signal susceptible d'être généré par le capteur du système de positionnement lors d'un balayage de spot au-dessus des codeurs 124a, respectivement selon les directions x et y.

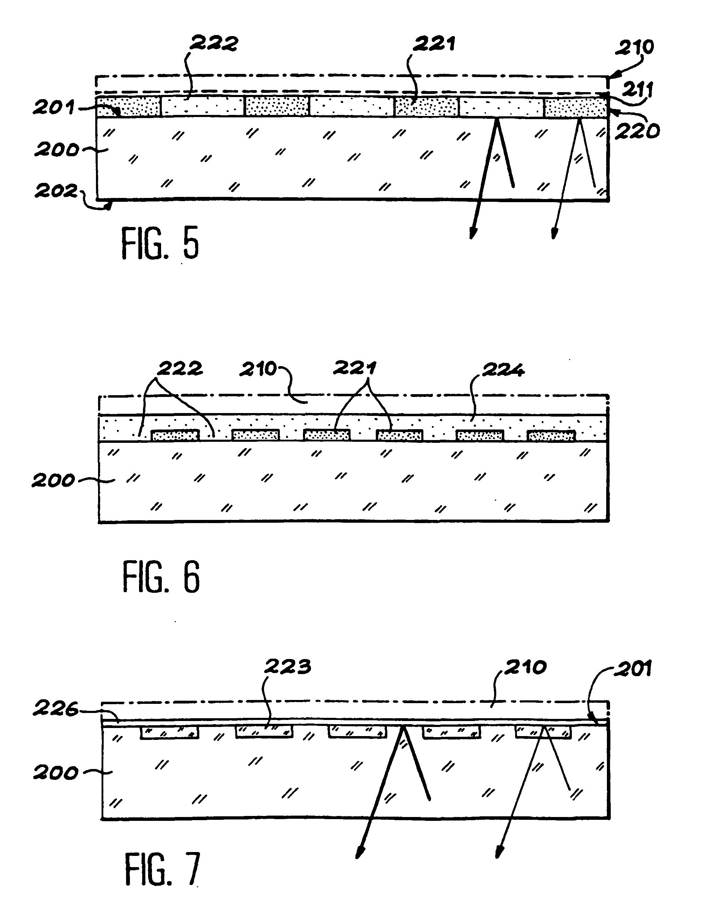

La figure 5 est une coupe schématique d'une partie de biopuce, sur laquelle les références 201 et 202 désignent respectivement des faces d'un substrat 200 appelées face avant et arrière, par commodité.

Le substrat 200 est en un matériau transparent à une lumière incidente de lecture, tel que du verre. Il est recouvert sur sa face avant 201 par une première couche 220.

La première couche 220 comporte une alternance de régions 221 et 222 juxtaposées, respectivement en un premier matériau et un deuxième matériau. Le premier matériau, par exemple du nitrure de silicium, présente une première réflectivité pour la lumière incidente, et le deuxième matériau, par exemple de l'oxyde de silicium, présente une deuxième réflectivité toujours pour cette lumière incidente, différente de la première réflectivité. La différence entre la première et la deuxième réflectivité est de l'ordre de 1 à 5%, par exemple 2%.

Les régions 221 et 222 de la première couche peuvent être agencées de façon à former une piste de guidage et constituent des repères de positionnement.

Une deuxième couche 210 est une couche fonctionnelle qui comporte des réactifs, et forme les zones de reconnaissance. On peut se reporter à ce sujet à la description qui précède.

Dans ce mode de réalisation, comme dans les autres modes de réalisation des figures 6 à 9, les régions 221 et 222 sont sensiblement transparentes, c'est-à-dire que les rayons incidents les traversent, et que ces derniers permettent une lecture des zones de reconnaissance. Les régions 221 et 222 sont superposées avec des zones de reconnaissance et des repères de positionnement eux-mêmes sensiblement transparents.

La couche 210 peut être formée directement sur la première couche ou, de préférence, sur une couche d'accrochage 211, destinés à fixer les molécules de reconnaissance.

Les molécules de reconnaissance sont choisies parmi des composés chimiques ou biologiques tels que des sondes à ADN, des anticorps ou des antigènes.

Le fait d'utiliser un support 200 transparent permet d'appliquer une lumière de lecture depuis la face arrière 202 et facilite ainsi la mise en contact de la face avant avec un milieu à analyser. Des rayons se réfléchissant respectivement sur des régions 221, 222 sont représentées à titre d'illustration sous la forme de flèches.

La figure 6 montre une autre possibilité de réalisation constituant une variante par rapport à la figure 5.

Une couche de nitrure de silicium est déposée sur le support 200 et est gravée de façon à définir des premières régions 221 disjointes. Une couche d'oxyde de silicium 224 est ensuite déposée de façon à venir enrober et recouvrir les premières régions 221. La couche d'oxyde de silicium constitue ainsi des deuxièmes régions 222 qui alternent avec les premières régions 221 et qui présentent une réflectivité différente de celles-ci.

Une couche fonctionnelle 210 recouvre la couche d'oxyde de silicium 224.

Une autre possibilité de réalisation des repères de positionnement de la biopuce est illustrée par la figure 7.

Sur cette figure, le support 200, en verre, est localement dopé depuis la face avant 201 de façon à y pratiquer des régions dopées 223 disjointes.

Les régions dopées 223 alternent ainsi avec des régions du support intentionnellement non dopées, ou dopées avec une concentration différente.

La différence de dopage entre les régions 223 et le reste du substrat introduit une différence d'indice et donc une différence de marche optique entre des rayons lumineux incidents qui atteignent respectivement les régions dopées ou non.

La différence de marche, proportionnelle à la différence d'indice entre les régions dopées et les régions non dopées, introduit dans les rayons incidents un déphasage. Ce déphasage crée un contraste de phase entre les différentes régions dopées et non dopées. Celui-ci peut être détecté et exploité par le dispositif de lecture pour le positionnement relatif de la puce et le repérage des zones de reconnaissance.

Les régions dopées 223 constituent donc, des repères de positionnement au sens de l'invention.

Dans l'exemple de la figure, des rayons incidents se réfléchissent sur la face supérieure du substrat recouverte d'une couche fonctionnelle 210.

De façon à améliorer la réflexion, ou tout au moins pour garantir une réflexion indépendante de la couche fonctionnelle et du milieu avec lequel celle-ci est susceptible d'être mise en contact, une couche de réflexion intercalaire 226, par exemple d'alumine, peut être prévue entre le support et la couche fonctionnelle. L'indice et l'épaisseur de cette couche sont choisis de telle manière que l'empilement des couches minces optiques 200, 223, 226 et 210 forment un miroir dichroïque, dont la réflectivité est maîtrisée selon les techniques connues de dépôts de couches minces optiques. On choisira par exemple un indice pour la couche 226 supérieur à celui des repères et du support.

La couche intercalaire peut également servir de couche d'accrochage ou être associée à une couche d'accrochage pour les réactifs des zones de reconnaissance moléculaire.

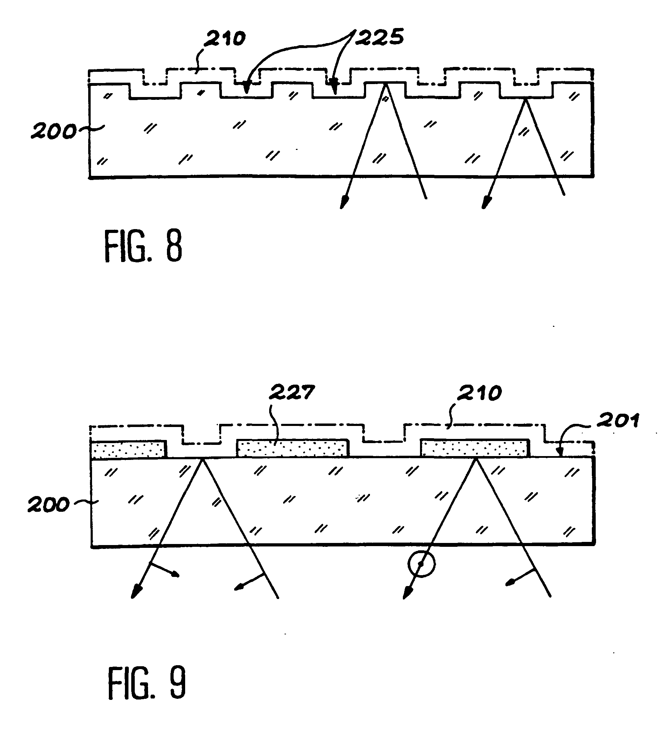

Encore une autre possibilité de réalisation des repères de positionnement de la biopuce est illustrée par la figure 8.

Dans l'exemple de cette figure, les repères de positionnement sont obtenus par gravure de dépressions disjointes 225 dans le support 200, depuis sa face supérieure 201. La profondeur e des dépressions est fixée de préférence telle que $e = \frac{\lambda}{4n}$, où $\lambda$ est une longueur d'onde de la lumière incidente et n l'indice optique du support 200.

Des rayons lumineux réfléchis sur la face supérieure respectivement dans les régions correspondant aux dépressions et les régions non gravées, traversent des épaisseurs de matière différentes et présentent ainsi une différence de marche.

La différence de marche est proportionnelle à la profondeur des gravures et provoque un déphasage entre les rayons.

De façon comparable à l'exemple de la figure 7, le déphasage crée un contraste de phase détectable par un dispositif de lecture.

Une couche fonctionnelle 210 constituant les zones de reconnaissance recouvre la face supérieure 201.

De la façon décrite précédemment, une couche intercalaire et/ou une couche d'accrochage peuvent être prévues entre le support et la couche fonctionnelle.

Un dernier exemple de réalisation des repères de positionnement de la biopuce est donné par la figure 9.

Dans cet exemple, les repères de positionnement ne sont pas détectés à partir d'une différence de réflectivité ou d'une différence de marche optique, mais par une modification de la polarisation de la lumière qu'ils engendrent.

Une couche de matériau biréfringent, de type rotateur ou quart-d'onde, est formée sur la face supérieure 201 du support et est gravée pour obtenir des repères de positionnement sous la forme de régions disjointes 227.

Lorsqu'un rayon de lumière incidente polarisé selon une première direction atteint une région 227 de matériau biréfringent et la traverse ou s'y réfléchit, sa direction de polarisation est modifiée par rotation. En revanche, un rayon polarisé qui atteint le verre nu du support 200 conserve sa polarisation inchangée après réflexion.

Les repères de positionnement peuvent ainsi être détectés en insérant dans le système optique de positionnement du dispositif de lecture un composant sélectionnant la direction de polarisation initiale ou modifiée. Ce composant est par exemple un analyseur.

Avantageusement, en neutralisant ou en retirant l'analyseur, les repères de positionnement deviennent "invisibles".

De même que dans les exemples précédents, le substrat est garni d'une couche fonctionnelle 210. Il peut également être équipé d'une couche intercalaire telle que décrite précédemment.

<u>DOCUMENTS CITES</u>

(1)
"Photothermal spectroscopy methods for chemical analysis",
S.E. Bialkowski, vol. 137 in chemical analysis : a série of monographs on analytical chemistry and its applications, Wiley.
(2)
J. Appl. Phys. Lett. 36, 130 (1979),
(3)
US-A-4 299 494.
(4)
Fotiou et Morris, Appl. Spectrosc. 40, 704 (1986)".
(5)
US-A-5 646 411
(6)
"La puce ADN : un multiréacteur de paillasse" de M. Bellis et P. Casellas, dans Médecine/Sciences, n°11, vol. 13, 1997, pages 1317 à 1324
(7)
"DNA sequencing by hybridization - a megasequencing method and diagnostic tool ?" de A.D. Mirzabekov dans TIBTECH, volume 12, Janvier 1994, pages 27-32, Elsevier Science.
(8)
"DNA chips : An array possibilities" de A. Marshall et J. Hodgson dans Nature Biotechnology, volume 16, janvier 1998, p. 27-31.
(9)

WO-A-98 01533

(10)

US-A-5 721 435

(11)

WO-98/28623

(12)

WO-98/38490

(13)

EP-A-0 640 826

## Revendications

1. Dispositif de lecture en temps réel d'une biopuce comportant une pluralité de zones de reconnaissance (110) et une pluralité de repères optiques de positionnement (122, 124, 124a, 221, 222, 223, 225, 227), les zones de reconnaissance comportant des fragments d'ADN ou d'ARN et occupant par rapport aux repères optiques de positionnement, des emplacements prédéterminés, le dispositif comportant :

   - une tête optique (20) apte à projeter sur la biopuce une lumière incidente,
   - des moyens de déplacement (14 et/ou 24) relatif de la tête et de ladite biopuce, aptes à effectuer un balayage de la biopuce, et comportant des moyens de déplacement macroscopique (14) (à grande échelle) et de moyens de déplacement microscopique (24) (à petite échelle),
   - un premier système optique (40), dit système d'analyse associé à ladite tête optique pour projeter sur au moins un premier capteur électrooptique (42) une lumière susceptible de provenir des zones de reconnaissance,
   - un deuxième système optique (60), dit système de positionnement, associé à la tête optique pour projeter sur au moins un deuxième capteur électrooptique (62) une lumière susceptible de provenir d'au moins un repère de positionnement, et
   - des moyens d'asservissement (70) des moyens de déplacement de ladite tête optique pour contrôler les moyens de déplacement en fonction de signaux électriques du capteur électrooptique du système optique de positionnement (62), les moyens d'asservissement (70) étant connectés aux moyens de déplacement microscopique (24),

   **caractérisé par le fait que** la tête optique (20) comporte une lentille (22) de focalisation et au moins un actionneur (24) de déplacement axial et/ou latéral de mise au point de la lentille (22), et comportant un troisième système optique (80), dit de mise au point, associé à la tête optique (20), pour projeter sur un troisième capteur électrooptique une lumière provenant de la réflexion de la lumière incidente sur la biopuce, et des moyens (70) d'asservissement de mise au point reliés à l'actionneur (24) pour contrôler le déplacement de mise au point de la lentille.

2. Dispositif selon la revendication 1, **caractérisé par le fait que** le système optique d'analyse (40) est un système optique confocal.

3. Dispositif selon l'une quelconque des revendications 1 ou 2, **caractérisé par le fait que** le premier capteur électrooptique, recevant une lumière émise par les molécules cibles présentes sur les zones de reconnaissance, est sensible à une lumière de fluorescence, une lumière de réflexion, une lumière de détection d'hybridation par variation de la masse, d'épaisseur et/ou d'indice, et/ou une lumière représentative d'effets photothermiques.

4. Dispositif selon l'une quelconque des revendications 1 à 3, **caractérisé par le fait que** le premier capteur électrooptique (42) est optiquement relié au premier système optique par l'intermédiaire d'une fibre optique (47).

5. Dispositif selon l'une quelconque des revendications 1 à 4, **caractérisé par le fait que** les premier et deuxième systèmes optiques sont couplés à la tête optique par l'intermédiaire d'une lame dichroïque (32).

6. Dispositif selon la revendication 1, **caractérisé en ce qu'**il comprend un système optique unique qui inclut les premier et deuxième systèmes optiques, et au moins un capteur électrooptique commun aux premier et deuxième systèmes optiques, ledit capteur optique commun recevant la lumière provenant des zones de reconnaissance moléculaire et la lumière provenant d'au moins un repère optique de positionnement, et étant relié aux moyens d'asservissement du balayage de la tête optique.

**7.** Dispositif de lecture en temps réel d'une biopuce comportant une pluralité de zones de reconnaissance (110) et une pluralité de repères optiques de positionnement (122, 124, 124a, 221, 222, 223, 225, 227), les zones de reconnaissance comportant des fragments d'ADN ou d'ARN et occupant par rapport aux repères optiques de positionnement, des emplacements prédéterminés, le dispositif comportant :

- une tête optique (20) apte à projeter sur la biopuce une lumière incidente,
- des moyens de déplacement (14 et/ou 24) relatif de la tête et de ladite biopuce, aptes à effectuer un balayage de la biopuce, et comportent des moyens de déplacement macroscopique (14) (à grande échelle) et de moyens de déplacement microscopique (24) (à petite échelle),
- un premier système optique (40), dit système d'analyse associé à ladite tête optique pour projeter sur au moins un premier capteur électrooptique (42) une lumière susceptible de provenir des zones de reconnaissance,
- un deuxième système optique (60), dit système de positionnement, associé à la tête optique pour projeter sur au moins un deuxième capteur électrooptique (62) une lumière susceptible de provenir d'au moins un repère de positionnement, et
- des moyens d'asservissement (70) des moyens de déplacement de ladite tête optique pour contrôler les moyens de déplacement en fonction de signaux électriques du capteur électrooptique du système optique de positionnement (62), les moyens d'asservissement (70) étant connectés aux moyens de déplacement microscopique (24),

**caractérisé en ce qu'**il comprend un système optique unique qui inclut les premier et deuxième systèmes optiques, et au moins un capteur électrooptique commun aux premier et deuxième systèmes optiques, ledit capteur optique commun recevant la lumière provenant des zones de reconnaissance moléculaire et la lumière provenant d'au moins un repère optique de positionnement, et étant relié aux moyens d'asservissement du balayage de la tête optique.

**8.** Dispositif selon la revendication 7, **caractérisé par le fait que** le système optique d'analyse (40) est un système optique confocal.

**9.** Dispositif selon l'une quelconque des revendications 7 ou 8, **caractérisé par le fait que** le premier capteur électrooptique, recevant une lumière émise par les molécules cibles présentes sur les zones de reconnaissance, est sensible à une lumière de fluorescence, une lumière de réflexion, une lumière de détection d'hybridation par variation de la masse, d'épaisseur et/ou d'indice, et/ou une lumière représentative d'effets photothermiques.

**10.** Dispositif selon l'une quelconque des revendications 7 à 9, **caractérisé par le fait que** le premier capteur électrooptique (42) est optiquement relié au premier système optique par l'intermédiaire d'une fibre optique (47).

**11.** Biopuce comportant une pluralité de zones de reconnaissance moléculaire (110) et une pluralité de repères optiques de positionnement (122, 124, 124a, 221, 222, 223, 225, 227), **caractérisée par le fait que** les zones de reconnaissance moléculaire sont superposées en tout ou partie aux repères optiques de positionnement de façon à recouvrir tout ou partie desdits repères.

**12.** Biopuce selon la revendication 11, **caractérisée par le fait que** les repères de positionnement sont transparents à au moins une lumière de fluorescence susceptible d'être émise depuis les zones de reconnaissance, en réponse à au moins une lumière incidente de lecture.

**13.** Biopuce selon l'une des revendications 11 ou 12, **caractérisée par le fait que** les zones de reconnaissance moléculaire occupent par rapport aux repères optiques de positionnement, des emplacements prédéterminés.

**14.** Biopuce selon l'une quelconque des revendications 11 à 13, **caractérisée par le fait qu'**un repère optique (124, 124a) est respectivement associé à chaque zone de reconnaissance moléculaire.

**15.** Biopuce selon l'une quelconque des revendications 11 à 14, **caractérisée par le fait que** les zones de reconnaissance moléculaire (110) sont agencées en lignes et en colonnes, et qu'au moins un repère optique (124) est associé à chaque ligne et/ou à chaque colonne de zones de reconnaissance moléculaire.

**16.** Biopuce selon l'une quelconque des revendications 11 à 15, **caractérisée par le fait que** les repères optiques comportent des plages aptes à réfléchir une lumière incidente, un pourcentage de lumière réfléchie étant inférieur à 50% et de préférence, inférieur à 5%.

17. Biopuce selon l'une quelconque des revendications 11 à 16, **caractérisée par le fait que** les repères optiques comportent des plages avec une surface structurée apte à introduire un déphasage dans une lumière incidente.

18. Biopuce selon l'une quelconque des revendications 11 à 17, **caractérisée par le fait que** les repères optiques comportent des pistes de positionnement en un matériau diffusant ou fluorescent, s'étendant le long de rangées de zones de reconnaissance, et des plages réfléchissantes disposées sur lesdites pistes de positionnement.

19. Biopuce selon l'une quelconque des revendications 11 à 17, **caractérisée par le fait que** les repères optiques comportent des pistes faiblement réfléchissantes (122) avec un coefficient de réflexion inférieur à 50%, de préférence inférieur à 5%, s'étendant le long de rangées de zones de reconnaissance (110), les pistes présentant localement des plages (124) non réfléchissantes.

20. Biopuce selon l'une quelconque des revendications 11 à 19, **caractérisée par le fait que** des régions adjacentes des repères de positionnement présentent respectivement une différence de chemin optique pour la lumière incidente.

21. Biopuce selon l'une des revendications 11 à 20, **caractérisée par le fait que** les repères de positionnement adjacents (221, 222) sont réalisées respectivement en des matériaux présentant des réflectivités faibles inférieures à 50% et de préférence inférieures à 5%, et différentes l'une de l'autre.

22. Biopuce selon la revendication 21, **caractérisée par le fait que** des régions adjacentes des repères de positionnement présentent respectivement des épaisseurs physiques différentes.

23. Biopuce selon la revendication 21, **caractérisée par le fait que** des régions adjacentes des repères de positionnement présentent des dopages différents.

24. Biopuce selon l'une quelconque des revendications 11 à 23, comprenant entre les repères de positionnement et une garniture des zones de reconnaissance, une couche intercalaire (226), l'indice et la réflectivité de ladite couche intercalaire étant choisis de façon à former un miroir dichroïque.

25. Biopuce selon l'une quelconque des revendications 11 à 24, **caractérisée par le fait que** la réflectivité des repères de positionnement et/ou d'une interface entre les zones de reconnaissance et les repères de positionnement est comprise entre 1 et 10% pour un faisceau de lumière atteignant la biopuce par une face, dite arrière, opposée à une face équipée de molécules de reconnaissance.

26. Biopuce selon l'une quelconque des revendications 11 à 24, **caractérisée par le fait que** la réflectivité des repères de positionnement et/ou d'une interface entre un matériau de garniture des zones de reconnaissance et les repères de positionnement est comprise entre 1 et 100% pour un faisceau de lumière atteignant une face (avant) de la biopuce recouverte du matériau de garniture.

27. Biopuce selon l'une quelconque des revendications 11 à 26, **caractérisée par le fait que** les repères de positionnement comportent des régions (227) de matériau biréfringeant susceptibles de modifier l'orientation de la polarisation d'une lumière de lecture incidente polarisée.

28. Biopuce selon l'une quelconque des revendications 11 à 27, **caractérisée par le fait que** les zones de reconnaissance moléculaire présentent une couche d'accrochage (211) transparente.

29. Biopuce selon l'une des revendications 11 à 28, **caractérisée par le fait que** les zones de reconnaissance sont garnies de réactifs choisis parmi des réactifs chimiques ou biologique tels que des sondes à ADN, des anticorps, des antigènes.

30. Procédé de lecture au moyen d'un dispositif conforme à l'une quelconque des revendications 1 à 6, d'une biopuce selon l'une des revendications 11 à 29.

31. Procédé de lecture au moyen d'un dispositif conforme à l'une quelconque des revendications 7 à 10 d'une biopuce selon l'une des revendications 11 à 29.

**EP 1 119 769 B1**

**Patentansprüche**

1. Vorrichtung zum Auslesen eines Biochips in Echtzeit, eine Vielzahl von Erkennungszonen (110) und eine Vielzahl von optischen Positionsbezugselementen (122, 124, 124a, 221, 222, 223, 225, 227) umfassend, wobei die Erkennungszonen DNA- oder RNA-Fragmente enthalten und bezüglich der optischen Positionsbezugselemente festgelegte Plätze einnehmen, und die Vorrichtung dabei umfasst:

   - einen optischen Kopf (20), fähig ein einfallendes Licht auf den Biochip zu projizieren,
   - Relativverschiebungseinrichtungen (14 und/oder 24) des Kopfs und des genannten Biochips, die eine Abtastung des Biochips ermöglichen und makroskopische (großmaßstäbliche) Verschiebungseinrichtungen (14) sowie mikroskopische (kleinmaßstäbliche) Verschiebungseinrichtungen (24) umfassen,
   - ein Analysesystem genanntes erstes optisches System (40), dem optischen Kopf zugeordnet, um ein aus den Erkennungszonen stammendes Licht wenigstens auf einen ersten elektrooptischen Sensor (42) zu projizieren,
   - ein Positionierungssystem genanntes zweites optisches System (60), dem optischen Kopf zugeordnet, um ein von wenigstens einem Positionsbezugselement stammendes Licht auf wenigstens einen zweiten elektrooptischen Sensor (62) zu projizieren, und
   - Nachführungseinrichtungen (70) der Verschiebungseinrichtungen des genannten optischen Kopfs, um die Verschiebungseinrichtungen in Abhängigkeit von elektrischen Signalen des elektrooptischen Sensors des optischen Positionierungssystems (62) zu steuern, wobei die Nachführungseinrichtungen (70) mit den mikroskopischen Verschiebungseinrichtungen (24) verbunden sind,

   **dadurch gekennzeichnet, dass** der optische Kopf (20) eine Fokussierlinse (22) und wenigstens einen Stellantrieb (24) zur axialen und/oder lateralen Fokussierverschiebung der Linse (22) und ein drittes dem optischen Kopf (20) zugeordnetes optisches System (80) zur Projektion eines von der Reflexion des auf dem Biochip einfallenden Lichts stammenden Lichts auf einen dritten elektrooptischen Sensor sowie mit dem Stellantrieb (24) verbundene Nachführungseinrichtungen (70) zur Steuerung der Fokussierverschiebung der Linse umfasst.

2. Vorrichtung nach Anspruch 1, **dadurch gekennzeichnet, dass** das optische Analysesystem (40) ein konfokales optisches System ist.

3. Vorrichtung nach einem der Ansprüche 1 oder 2, **dadurch gekennzeichnet, dass** der erste elektrooptische Sensor, der ein von den in den Erkennungszonen vorhandenen Zielmolekülen abgestrahltes Licht empfängt, empfindlich ist für ein Fluoreszenzlicht, ein Reflexionslicht, ein Licht zur Detektion von Hybridisierung durch Veränderung der Masse, der Dicke und/oder des Index, und/oder ein für photothermische Effekte charakteristisches Licht.

4. Vorrichtung nach einem der Ansprüche 1 bis 3, **dadurch gekennzeichnet, dass** der erste elektrooptische Sensor (42) mit dem ersten optischen System durch eine optische Faser (47) optisch verbunden ist.

5. Vorrichtung nach einem der Ansprüche 1 bis 4, **dadurch gekennzeichnet, dass** das erste und das zweite optische System mit dem optischen Kopf mit Hilfe eines Strahlteilers bzw. dichroitischen Plättchens (32) optisch verbunden sind.

6. Vorrichtung nach Anspruch 1, **dadurch gekennzeichnet, dass** sie ein einziges optisches System, welches das erste und das zweite optische System einschließt, und wenigstens einen für das erste und das zweite optische System gemeinsamen elektrooptischen Sensor umfasst, wobei der gemeinsame optische Sensor das von den Molekularerkennungszonen stammende Licht und das von wenigstens einem optischen Positionsbezugselement stammende Licht empfängt und mit den Abtastungs-Nachführungseinrichtungen des optischen Kopfs verbunden ist.

7. Vorrichtung zur Echtzeit-Auslesung eines Biochips mit einer Vielzahl von Erkennungszonen (110) und einer Vielzahl von optischen Positionsbezugselementen (122, 124, 124a, 221, 222, 223, 225, 227), wobei die Erkennungszonen DNA- oder RNA-Fragmente enthalten und in Bezug auf die optischen Positionsbezugselemente festgelegte Plätze einnehmen und die Vorrichtung dabei umfasst:

   - einen optischen Kopf (20), fähig ein einfallendes Licht auf den Biochip zu projizieren,
   - Relativverschiebungseinrichtungen (14 und/oder 24) des Kopfs und des genannten Biochips, die eine Abtastung des Biochips ermöglichen und makroskopische (großmaßstäbliche) Verschiebungseinrichtungen (14) und mikroskopische (kleinmaßstäbliche) Verschiebungseinrichtungen (24),

- ein Analysesystem genanntes erstes optisches System (40), dem optischen Kopf zugeordnet, um ein aus den Erkennungszonen stammendes Licht wenigstens auf einen ersten elektrooptischen Sensor (42) zu projizieren,

- ein Positionierungssystem genanntes zweites optisches System (60), dem optischen Kopf zugeordnet, um ein von wenigstens einem Positionsbezugselement stammendes Licht auf wenigstens einen zweiten elektrooptischen Sensor (62) zu projizieren, und Nachführungseinrichtungen (70) der Verschiebungseinrichtungen des genannten optischen Kopfs, um die Verschiebungseinrichtungen in Abhängigkeit von elektrischen Signalen des elektrooptischen Sensors des optischen Positionierungssystems (62) zu steuern, wobei die Nachführungseinrichtungen (70) mit den mikroskopischen Verschiebungseinrichtungen (24) verbunden sind,

**dadurch gekennzeichnet, dass** sie ein einziges, das erste und das zweite optische System einschließendes optisches System und einen für das erste und das zweite optische System gemeinsamen elektrooptischen Sensor umfasst, wobei der gemeinsame optische Sensor das von den Molekularerkennungszonen stammende Licht und das von wenigstens einem optischen Positionsbezugselement stammende Licht empfängt und mit den Abtastungs-Nachführungseinrichtungen des optischen Kopfs verbunden ist.

8. Vorrichtung nach Anspruch 7, **dadurch gekennzeichnet, dass** das optische Analysesystem (40) ein konfokales optisches System ist.

9. Vorrichtung nach einem der Ansprüche 7 oder 8, **dadurch gekennzeichnet, dass** der erste elektrooptische Sensor, der ein von den in den Erkennungszonen vorhandenen Zielmolekülen abgestrahltes Licht empfängt, empfindlich ist für ein Fluoreszenzlicht, ein Reflexionslicht, ein Licht zur Detektion von Hybridisierung durch Veränderung der Masse, der Dicke und/oder des Index, und/oder ein für photothermische Effekte charakteristisches Licht.

10. Vorrichtung nach einem der Ansprüche 7 bis 9, **dadurch gekennzeichnet, dass** der erste elektrooptische Sensor (42) mit dem ersten optischen System durch eine optische Faser (47) optisch verbunden ist.

11. Biochip mit einer Vielzahl von Erkennungszonen (110) und einer Vielzahl von optischen Positionsbezugselementen (122, 124, 124a, 221, 222, 223, 225, 227), **dadurch gekennzeichnet, dass** die Molekularerkennungszonen den optischen Positionsbezugselementen ganz oder teilweise überlagert sind, so dass sie diese Bezugselemente ganz oder teilweise übecdecken.

12. Biochip nach Anspruch 11, **dadurch gekennzeichnet, dass** die Positionsbezugselemente durchlässig sind für wenigstens ein Fluoreszenzlicht, abgestrahlt von den Erkennungszonen als Reaktion auf ein einfallendes Ausleselicht.

13. Biochip nach einem der Ansprüche 11 oder 12, **dadurch gekennzeichnet, dass** die Molekularerkennungszonen in Bezug auf die optischen Positionsbezugselemente bestimmte Plätze einnehmen.

14. Biochip nach einem der Ansprüche 11 bis 13, **dadurch gekennzeichnet, dass** jeder Molekularerkennungszone jeweils ein optisches Bezugselement (124, 124a) zugeordnet ist.

15. Biochip nach einem der Ansprüche 11 bis 14, **dadurch gekennzeichnet, dass** die Molekularerkennungszonen (110) zeilen- und spaltenförmig angeordnet sind und dass jeder Molekularerkennungszeile und/oder -spalte wenigstens ein optisches Bezugselement (124) zugeordnet ist.

16. Biochip nach einem der Ansprüche 11 bis 15, **dadurch gekennzeichnet, dass** die optischen Bezugselemente Bereiche umfassen, die fähig sind, ein einfallendes Licht zu reflektieren, wobei ein Prozentsatz reflektierten Lichts kleiner als 50 % und vorzugsweise kleiner als 5 % ist.

17. Biochip nach einem der Ansprüche 11 bis 16, **dadurch gekennzeichnet, dass** die optischen Bezugselemente Bereiche mit einer strukturierten Oberfläche umfassen, fähig eine Phasenverschiebung bei einem einfallenden Licht einzuführen.

18. Biochip nach einem der Ansprüche 11 bis 17, **dadurch gekennzeichnet, dass** die optischen Bezugselemente sich längs von Erkennungszonen-Reihen erstreckende Positionierungsbahnen aus einem streuenden oder fluoreszierenden Licht und in diesen Positionierungsbahnen vorgesehene reflektierende Bereiche umfassen.

19. Biochip nach einem der Ansprüche 11 bis 17, **dadurch gekennzeichnet, dass** die optischen Bezugselemente

**EP 1 119 769 B1**

schwach reflektierende Bahnen (122) mit einem Reflexionskoeffizienten von 50 % und vorzugsweise 5 % umfassen, die sich längs von Reihen von Erkennungszonen (110) erstrecken, wobei die Bahnen lokal nichtreflektierende Bereiche (124) aufweisen.

20. Biochip nach einem der Ansprüche 11 bis 19, **dadurch gekennzeichnet, dass** benachbarte Bereiche der Positionsbezugselemente jeweils eine Differenz des optischen Wegs des einfallenden Lichts aufweisen.

21. Biochip nach einem der Ansprüche 11 bis 20, **dadurch gekennzeichnet, dass** die benachbarten Positionsbezugselemente (221, 222) jeweils aus Materialien mit unterschiedlichen niedrigen Reflexionsgraden von weniger als 50 % und vorzugsweise weniger als 5 % sind.

22. Biochip nach Anspruch 21, **dadurch gekennzeichnet, dass** die benachbarten Bereiche der Positionsbezugselemente jeweils unterschiedliche physikalische Dicken aufweisen.

23. Biochip nach Anspruch 21, **dadurch gekennzeichnet, dass** die benachbarten Bereiche der Positionsbezugselemente unterschiedliche Dotierungen aufweisen.

24. Biochip nach einem der Ansprüche 11 bis 23, der zwischen den Positionsbezugselementen und einer Garnitur bzw. Ausstattung der Erkennungszonen eine Zwischenschicht (226) umfasst, wobei der Index und der Reflexionsgrad der genannten Zwischenschicht so gewählt wird, dass sie einen dichroitischen Spiegel bildet.

25. Biochip nach einem der Ansprüche 11 bis 24, **dadurch gekennzeichnet, dass** der Reflexionsgrad der Positionsbezugselemente und/oder einer Grenzfläche zwischen den Erkennungszonen und den Positionsbezugselementen zwischen 1 und 10% enthalten ist für einen Lichtstrahl, der den Biochip auf einer sogenannten Rückseite erreicht, die einer mit den Erkennungsmolekülen ausgestatteten Seite entgegengesetzt ist.

26. Biochip nach einem der Ansprüche 11 bis 24, **dadurch gekennzeichnet, dass** der Reflexionsgrad der Positionsbezugselemente und/oder einer Grenzfläche zwischen einem Ausstattungsmaterial der Erkennungszonen und den Positionsbezugselementen zwischen 1 und 100% enthalten ist für einen Lichtstrahl, der den Biochip auf einer mit Ausstattungsmaterial überzogenen (vorderen) Seite erreicht.

27. Biochip nach einem der Ansprüche 11 bis 26, **dadurch gekennzeichnet, dass** die Positionsbezugselemente Bereiche (227) mit doppelbrechendem Material umfassen, welche die Polarisation eines polarisierten einfallenden Ausleselichts modifizieren können.

28. Biochip nach einem der Ansprüche 11 bis 27, **dadurch gekennzeichnet, dass** die Molekularerkennungszonen eine transparente Haftschicht (211) aufweisen.

29. Biochip nach einem der Ansprüche 11 bis 28, **dadurch gekennzeichnet, dass** die Erkennungszonen mit Reagenzien ausgestattet sind, ausgewählt unter chemischen oder biologischen Reagenzien wie etwa DNA-Sonden, Antikörpern, Antigenen.

30. Verfahren zum Auslesen eines Biochips nach einem der Ansprüche 11 bis 29 mit Hilfe einer Vorrichtung nach einem der Ansprüche 1 bis 6.

31. Verfahren zum Auslesen eines Biochips nach einem der Ansprüche 11 bis 20 mit Hilfe einer Vorrichtung nach einem der Ansprüche 7 bis 10.

**Claims**

1. Device for reading a biochip comprising several recognition areas (110) and several optical positioning marks (122, 124, 124a, 221, 222, 223, 225, 227), in real time, the recognition areas comprising fragments of DNA or RNA and occupying predetermined positions relative to the optical positioning marks, the device comprising:

   - an optical head (20) capable of projecting incident light onto the biochip,
   - means of relative displacement (14 and/or 24) between the head and the said biochip, capable of scanning over the biochip, and having (large scale) macroscopic displacement means (14) and (small scale) microscopic displacement means (24),

- a first optical system (20) called an analysis system associated with the said optical head to project light possibly coming from recognition areas, onto at least a first electrooptical sensor (42),
- a second optical system (60) called a positioning system associated with the optical head to project any light from at least one positioning mark, onto at least one second electrooptical sensor (62), and
- means (70) of servocontrolling the means of displacing the said optical head to control these displacement means as a function of electrical signals from the electrooptical sensor in the optical positioning system (62), the servocontrol means (70) being connected to the microscopic displacement means (24),

**characterized in that** the optical head (20) comprises a focussing lens (22) and at least one axial displacement and/or lateral focussing actuator (24) for the lens (22) and having a third, focussing optical system (80) associated with the optical head (20) in order to project onto a third electrooptical sensor a light resulting from the reflection of the incident light on the biochip and focussing servocontrol means (70) connected to the actuator (24) for controlling the focussing displacement of the lens.

2. Device according to claim 1, **characterized in that** the optical analysis system (40) is a confocal optical system.

3. Device according to either of claims 1 or 2, **characterized in that** the first electrooptical sensor receiving light emitted by target molecules present on recognition areas, is sensitive to fluorescent light, reflection light, hybridisation detection light by variation of the mass, thickness and/or index and/or light representative of photothermal effects.

4. Device according to any one of claims 1 to 3, **characterized in that** the first electrooptical sensor (42) is optically connected to the first optical system through an optical fibre (47).

5. Device according to any one of claims 1 to 4, **characterized in that** the first and second optical systems are coupled to the optical head through a dichroic slide (32).

6. Device according to claim 1, **characterized in that** it comprises a single optical system including first and second optical systems and at least one electrooptical sensor common to the first and second optical systems, the said common optical sensor collecting light originating from molecular recognition areas and light originating from at least one positioning mark, and connected to the means of servocontrolling scanning by the optical head.

7. Device for the real time reading of a biochip comprising several recognition areas (110) and several optical positioning marks (122, 124, 124a, 221, 222, 223, 225, 227), the recognition areas comprising fragments of DNA or RNA and occupying predetermined positions relative to the optical positioning marks, the device comprising:

- an optical head (20) capable of projecting incident light onto the biochip,
- means of relative displacement (14 and/or 24) between the head and the said biochip, capable of scanning over the biochip, and having (large scale) macroscopic displacement means (14) and (small scale) microscopic displacement means (24),
- a first optical system (20) called an analysis system associated with the said optical head to project light possibly coming from recognition areas, onto at least a first electrooptical sensor (42),
- a second optical system (60) called a positioning system associated with the optical head to project any light from at least one positioning mark, onto at least one second electrooptical sensor (62), and
- means (70) of servocontrolling the means of displacing the said optical head to control these displacement means as a function of electrical signals from the electrooptical sensor in the optical positioning system (62),

**characterized in that** it comprises a single optical system including the first and second optical systems, and at least one electrooptical sensor common to the first and second optical systems, said common optical sensor receiving the light from the molecular recognition areas and the light from at least one optical positioning mark, and being connected to the scanning servocontrol means of the optical head.

8. Device according to claim 7, **characterized in that** the optical analysis system (40) is a confocal optical system.

9. Device according to either of the claims 7 and 8, **characterized in that** the first electrooptical sensor receiving the light emitted by the target molecules present on the recognition areas is sensitive to a fluorescent light, a reflection light, a light for hybridisation detection by variation of the mass, thickness and/or index, and/or a light representing photothermal effects.

**10.** Device according to any one of the claims 7 to 9, **characterized in that** the first electrooptical sensor (42) is optically linked with the first optical system by an optical fibre (47).

**11.** Biochip comprising a plurality of molecular recognition areas (110) and a plurality of optical positioning marks (122, 124, 124a, 221, 222, 223, 225, 227), **characterized in that** the molecular recognition areas are wholly or partly superimposed on the optical positioning marks so as to wholly or partly cover said marks.

**12.** Biochip according to claim 11, **characterized in that** the positioning marks are transparent to at least one fluorescent light that could be emitted from recognition areas in response to at least one incident reading light.

**13.** Biochip according to either claims 11 or 12, **characterized in that** the molecular recognition areas are in predetermined locations relative to the optical positioning marks.

**14.** Biochip according to any one of claims 11 to 13, **characterized in that** an optical mark (124, 124a) is associated with each molecular recognition area.

**15.** Biochip according to any one of claims 11 to 14, **characterized in that** the molecular recognition areas (110) are arranged in rows and in columns, and at least one optical mark (124) is associated with each row and/or each column in the molecular recognition areas.

**16.** Biochip according to any one of claims 11 to 15, **characterized in that** the optical marks comprise strips that are capable of slightly reflecting incident light, the percentage of reflected light being less than 50% and preferably less than 5%.

**17.** Biochip according to any one of claims 11 to 16, **characterized in that** the optical marks comprise strips with a textured surface capable of introducing a phase shift in incident light.

**18.** Biochip according to any one of claims 11 to 17, **characterized in that** the optical marks comprise positioning tracks made of a diffusing or fluorescent material extending along rows of the recognition areas, and reflecting strips laid out on the said positioning tracks.

**19.** Biochip according to any one of claims 11 to 18, **characterized in that** the optical marks comprise slightly reflecting tracks (122) with a coefficient of reflection of less than 50%, and preferably less than 5%, extending along rows of recognition areas (110), the tracks including local non-reflecting areas (124).

**20.** Biochip according to any one of claims 11 to 19, **characterized in that** adjacent regions of positioning marks are provided with a different optical path for incident light.

**21.** Biochip according to any one of claims 11 to 20, **characterized in that** adjacent positioning marks (221, 222) are made from materials with low reflectivities of less than 50% and preferably less than 5%, and different from each other.

**22.** Biochip according to claim 21, **characterized in that** adjacent regions of positioning marks have different physical thicknesses.

**23.** Biochip according to claim 21, **characterized in that** adjacent regions of positioning marks have different dopings.

**24.** Biochip according to any one of claims 11 to 23, comprising an intermediate layer (226) between the positioning marks and a coating on the recognition areas, the index and the reflectivity of the said intermediate layer being chosen so as to form a dichroic mirror.

**25.** Biochip according to any one of claims 11 to 24, **characterized in that** the reflectivity of the positioning marks and/ or an interface between the recognition areas and the positioning marks is greater than 0%, and preferably between 1 and 10%, and more precisely between 1 and 5%, for a light beam reaching the biochip through one face called the back face, opposite the face on which recognition molecules are located.

26. Biochip according to any one of claims 11 to 24, **characterized in that** the reflectivity of the positioning marks and/ or an interface between a coating material on the recognition areas and the positioning marks is greater than 0%, and particularly between 1 and 100% for a light beam arriving at one face (front) of the biochip coated with the coating material.

27. Biochip according to any one of claims 11 to 26, **characterized in that** the positioning marks comprise regions (227) of birefringent material that could modify the polarization direction of polarized incident read light.

28. Biochip according to any one of claims 11 to 27, **characterized in that** the molecular recognition areas have a transparent bond layer (211).

29. Biochip according to any one of claims 11 to 28, **characterized in that** the recognition areas are coated with reagents chosen among chemical or biological reagents such as DNA probes, antibodies, antigens.

30. Process for reading by means of a device according to any one of the claims 1 to 6 a biochip according to one of the claims 11 to 29.

31. Process for reading by means of a device according to any one of the claims 7 to 10 a biochip according to one of the claims 11 to 29.

FIG.1

FIG. 2

FIG. 3

FIG. 4

FIG. 5

FIG. 6

FIG. 7

FIG. 8

FIG. 9